# EUROPEAN PATENT APPLICATION

(11) **EP 4 811 462 A1**
(43) Date of publication of application: **23.09.2026**
(21) Application number: 26195563.7
(22) Date of filing: 30.07.2026
(51) Int. Cl.: H01M 4/62, H01M 4/66, H01M 10/0525

(54) **SECONDARY BATTERY AND ELECTRONIC APPARATUS**

(30) Priority: 31.07.2025 CN 202511072625
(71) Applicant: Xiamen Ampace Technology Limited, Xiamen City, Fujian Province 361000 (CN)
(72) Inventor: CHEN, Jiahong, Xiamen City, Fujian Province, 361000 (CN)
(74) Representative: Kraus & Lederer PartGmbB

(57) **Abstract**

A secondary battery includes a positive electrode plate. The positive electrode plate includes a positive electrode current collector and a coating disposed on at least one surface of the positive electrode current collector. The coating includes a first coating and a second coating. The first coating is disposed between the positive electrode current collector and the second coating, and the first coating includes an inorganic material, a conductive agent, a binder, and a dispersant. Based on total mass of the first coating, a mass percentage of the inorganic material is w₁, where 15%≤w₁≤50%, a mass percentage of the conductive agent is w₂, where 15%<w₂≤40%, a mass percentage of the binder is w₃, where 30%≤w₃≤50%, and a mass percentage of the dispersant is w₄, where 0≤w₄≤5%.

## Description

### TECHNICAL FIELD

This application relates to the field of electrochemical technology, and in particular to a secondary battery and an electronic apparatus.

### BACKGROUND

Lithium-ion batteries (LIB) have been widely used in electric vehicles (such as EV, HEV, and PHEV), electric motorcycles, and energy storage (such as household storage, and industrial and commercial storage) due to their advantages of high energy density, stable voltage, low self-discharge rate, no memory effect, strong temperature adaptability, and environmental friendliness. However, as the market continues to increase requirements for the service life, charging and discharging speed, and safety of electric devices, higher requirements are placed on the cycle life, rate performance, and safety performance of LIB.

At present, the mainstream solution in the market is to apply a primer material layer on the surface of the positive electrode current collector to increase the bonding force between the active material and the positive electrode current collector and improve its conductive network. This can achieve the purpose of reducing the direct current resistance of the secondary battery and improving the cycling performance and rate performance of the secondary battery. However, the drop performance, impact performance, and puncture performance are unsatisfying.

Therefore, while ensuring that the battery has low direct current internal resistance, high cycling performance, and high rate performance, how to improve the drop performance, impact performance, and puncture performance of a battery is a technical problem that needs to be urgently solved by those skilled in the art.

### SUMMARY

This application is intended to provide a secondary battery and an electronic apparatus, so as to increase the bonding force between the second coating and the positive electrode current collector while taking into account the direct current resistance, cycling performance, and rate performance of the secondary battery, thereby improving the drop performance, impact performance, and puncture performance of the secondary battery. In particular, the puncture performance of the secondary battery is greatly improved.

It should be noted that in the summary of this application, a lithium-ion battery is used as an example of a secondary battery to explain this application, but the secondary battery of this application is not limited thereto. The specific technical solution is as follows.

A first aspect of this application provides a secondary battery, including a positive electrode plate, where the positive electrode plate includes a positive electrode current collector and a coating disposed on at least one surface of the positive electrode current collector, the coating includes a first coating and a second coating, and along a thickness direction of the positive electrode plate, the first coating is disposed between the positive electrode current collector and the second coating, where the first coating includes an inorganic material, a conductive agent, a binder, and a dispersant; based on total mass of the first coating, a mass percentage of the inorganic material is w₁, where 15%≤w₁≤50%, a mass percentage of the conductive agent is w₂, where 15%<w₂≤40%, a mass percentage of the binder is w₃, where 30%≤w₃≤50%, and a mass percentage of the dispersant is w₄, where 0≤w₄≤5%. In this application, the first coating is disposed between the positive electrode current collector and the second coating, and the mass percentages of the inorganic material, the conductive agent, the binder, and the dispersant in the first coating are controlled within the foregoing ranges. In this way, the positive electrode plate has high electrical conductivity, ensuring the electrical performance of the secondary battery, where the electrical performance includes the direct current resistance (DCR), rate performance, and cycling performance of the secondary battery. In addition, the thermal stability of the positive electrode plate can be effectively improved, delaying thermal runaway, and in particular, the risk of internal short circuit can be reduced when the secondary battery is punctured, thereby improving the drop performance, impact performance, and puncture performance of the secondary battery, especially the puncture performance. Furthermore, the bonding force between the positive electrode current collector and the second coating in the positive electrode plate can be improved, making the second coating less likely to peel off from the surface of the positive electrode current collector. This guarantees an electron pathway, further improving the drop performance, impact performance, and puncture performance of the secondary battery while reducing the direct current resistance and improving the rate performance and cycling performance of the secondary battery.

In one or more embodiments of this application, a sum of resistances of the positive electrode current collector and the first coating is R₁ Ω/mm², where 0.001≤R₁≤0.5, optionally 0.1≤R₁≤0.3; and/or a resistance of the positive electrode plate is R₂ Ω/mm², where 0.1≤R₂≤4, optionally 1≤R₂≤3. Controlling R₁ and R₂ within these preferred ranges helps further reduce the direct current resistance of the secondary battery and improve the rate performance and cycling performance of the secondary battery. In addition, the drop performance, impact performance, and puncture performance are improved, thereby better balancing between the electrical performance and safety performance of the battery.

In one or more embodiments of this application, 35%≤w₁≤50%. Controlling the mass percentage w₁ of the inorganic material in the first coating within that preferred range helps further improve the drop performance, impact performance, and puncture performance of the secondary battery while ensuring low direct current resistance and high rate performance and cycling performance of the secondary battery.

In one or more embodiments of this application, 15%<w₂≤25%. Controlling the mass percentage w₂ of the conductive agent in the first coating within that preferred range helps further improve the electrical performance of the secondary battery while ensuring the safety performance of the secondary battery.

In one or more embodiments of this application, a sum of thermal conductivities of the positive electrode current collector and the first coating is λ W/(m·K), where 0.55≤λ≤0.8. Controlling the thermal conductivity λ within this range helps quickly conduct the generated heat to the surrounding air when the secondary battery is subjected to mechanical abuse, especially during puncture, thereby reducing the risk of temperature runaway caused by local overheating. This effectively improves the drop performance, impact performance, and puncture performance of the secondary battery.

In one or more embodiments of this application, a sum of stiffnesses of the positive electrode current collector and the first coating is S₁ mN·m, where 0.03≤S₁≤0.25. Controlling the stiffness S₁ within this range helps better delay the direct contact between the positive electrode current collector and the negative active material when the secondary battery is punctured, thereby improving the drop performance, impact performance, and puncture performance of the secondary battery.

In one or more embodiments of this application, a stiffness of the positive electrode plate is S₂ mN·m, where 0.01≤S₂≤0.7. Controlling the stiffness S₂ of the positive electrode plate within this range helps improve the mechanical strength of the positive electrode plate, reduce the risk of internal short circuit, and reduce the generation of cracks and fragments during puncture, thereby delaying thermal runaway. In addition, it helps ensure the kinetic performance of the positive electrode plate and the structural stability during charging and discharging, improving the electrical performance and safety performance of the secondary battery.

In one or more embodiments of this application, a peel strength of the second coating is P N/m, where 10≤P≤20. Controlling the peel strength P of the second coating within this range helps further increase the bonding force between the second coating and the positive electrode current collector. In this case, the secondary battery has low direct current resistance, and high rate performance, cycling performance, drop performance, impact performance, and puncture performance.

In one or more embodiments of this application, the positive electrode plate satisfies at least one of the following characteristics: (1) the inorganic material includes at least one of boehmite, aluminum oxide, aluminosilicate, silicon dioxide, hydrotalcite, kaolin, or titanate nanoparticles; (2) the conductive agent includes at least one of carbon black or carbon nanotubes; (3) the binder includes at least one of polyacrylic acid, sodium polyacrylate, lithium polyacrylate, polyvinyl alcohol, polyethylene oxide, styrene-butadiene resin, sodium alginate, or chitosan; and (4) the dispersant includes at least one of sodium carboxymethyl cellulose or lithium carboxymethyl cellulose.

In one or more embodiments of this application, a weight-average molecular weight of the binder is Mw g/mol, where 1×10⁴≤Mw≤5×10⁵. Controlling the weight-average molecular weight Mw of the binder within this range helps improve the interfacial bonding force between the first coating, the positive electrode current collector, and the second coating and ensure the coating uniformity of the first coating. In addition, it has little negative impact on the electron conduction performance and lithium ion transport performance of the positive electrode plate, so that the secondary battery has low direct current resistance, and high rate performance and cycling performance, as well as high drop performance, impact performance, and puncture performance.

In one or more embodiments of this application, an average particle size of the carbon black is D₁ µm, where 0.5≤D₁≤4. When D₁ is controlled within this range, the average particle size of the carbon black is moderate, which helps reduce the direct current resistance of the secondary battery and improve the rate performance and cycling performance.

In one or more embodiments of this application, an average tube diameter of the carbon nanotube is D₂ nm, where 2≤D₂≤5, and an average tube length of the carbon nanotube is L µm, where 1≤L≤2. When D₂ and L are controlled within these ranges, the aspect ratio of the carbon nanotubes is moderate, which helps reduce the direct current resistance of the secondary battery and improve the rate performance and cycling performance.

In one or more embodiments of this application, a specific surface area of the conductive agent is B m²/g, where 60≤B≤90. When B is controlled within this range, the specific surface area of the conductive agent is moderate. This helps form a dense conductive network and ensure efficient ion transport, so that the secondary battery has low direct current resistance, and high rate performance and cycling performance.

In one or more embodiments of this application, a single-sided thickness of the first coating is T₁ µm, where 0.5≤T₁≤1.5. Controlling T₁ within this range helps better balance the physical protection of the first coating and ion and electron transport. In this case, the secondary battery has low direct current resistance, and high rate performance and cycling performance, as well as high drop performance, impact performance, and puncture performance. This better balances the electrical performance and safety performance of the secondary battery.

In one or more embodiments of this application, a single-sided thickness of the second coating is T₂ µm, where 40≤T₂≤180. Controlling T₂ within this range, helps further improve the rate performance and cycling performance of the secondary battery, as well as the drop performance, impact performance, and puncture performance of the secondary battery.

In one or more embodiments of this application, an average particle size of the inorganic material is D₃ µm, where 0.5≤D₃≤2. Controlling the average particle size D₃ of the inorganic material within this range helps reduce the shedding and pulverization of the active material while maintaining the barrier effect of the first coating. In addition, it also helps shorten the electron conduction path and ion diffusion path. Therefore, when D₃ is within this range, the secondary battery has low direct current resistance, and high rate performance and cycling performance, as well as high drop performance, impact performance, and puncture performance.

In one or more embodiments of this application, a single-sided thickness of the first coating is T₁ µm, an average particle size of the inorganic material is D₃ µm, and 0.8≤T₁/D₃≤1.5. Controlling T₁ and D₃ to satisfy this relationship helps improve the protective effect of the first coating, effectively delay thermal runaway, and improve the ion transport efficiency and electron conductivity of the entire positive electrode plate while ensuring the volumetric energy density of the secondary battery. In this case, the secondary battery has high safety performance and electrical performance.

In one or more embodiments of this application, along the thickness direction of the positive electrode plate, an orthographic projection area of the first coating on a surface of the positive electrode current collector is A₁, an orthographic projection area of the second coating on the surface of the positive electrode current collector is A₂, and A₁/A₂ is 0.9 to 1. Controlling A₁/A₂ within this range helps improve the protective effect of the first coating while ensuring the electrical performance of the secondary battery, and improve the structural stability of the positive electrode plate, so that the secondary battery has high drop performance, impact performance, and puncture performance.

In one or more embodiments of this application, along the thickness direction of the positive electrode plate, an area of the positive electrode current collector is A₃, and A₁/A₃ is 0.6 to 0.9. Controlling A₁/A₃ within this range helps reduce the contact between the positive electrode current collector and the negative electrode and better disperse the mechanical stress when the secondary battery is subjected to mechanical abuse while ensuring the electrical performance of the secondary battery, thereby further improving the drop performance, impact performance, and puncture performance of the battery.

In one or more embodiments of this application, a surface density of the first coating is ρ mg/cm², where 0.01≤ρ≤0.05. Controlling the surface density ρ of the first coating within this range helps further reduce the direct current resistance, and improve the rate performance and cycling performance of the secondary battery, as well as the drop performance, impact performance, and puncture performance.

A second aspect of this application provides an electronic apparatus, where the electronic apparatus includes the secondary battery according to any one of the foregoing embodiments. Therefore, the electronic apparatus has high usability.

Beneficial effects of the embodiments of this application:
The embodiments of this application provide a secondary battery and an electronic apparatus. The secondary battery includes a positive electrode plate. A first coating is disposed between the positive electrode current collector and the second coating of the positive electrode plate, and the mass percentages of the inorganic material, the conductive agent, the binder, and the dispersant in the first coating are controlled within the foregoing ranges. In this way, the positive electrode plate has a high electrical conductivity, ensuring that the secondary battery has low direct current resistance and high rate performance and cycling performance. In addition, the thermal stability of the positive electrode plate can be effectively improved. When the secondary battery is subjected to mechanical abuse, thermal runaway is delayed, especially reducing the risk of internal short circuit when the secondary battery is punctured. In this case, the secondary battery has high drop performance, impact performance, and puncture performance, especially the puncture performance. Furthermore, the bonding force between the positive electrode current collector and the second coating in the positive electrode plate can be increased, making the second coating less likely to peel off from the surface of the positive electrode current collector, and ensuring good interfacial contact. This guarantees an electron pathway, and reduces the risk of internal short circuit when the secondary battery is subjected to mechanical abuse, further improving the drop performance, impact performance, and puncture performance of the battery while reducing the direct current resistance and improving the rate performance and cycling performance of the battery.

Certainly, implementing any product or method of this application does not necessarily need to achieve all the advantages described above at the same time.

### BRIEF DESCRIPTION OF DRAWINGS

To illustrate the technical solutions in the embodiments of this application more clearly, the accompanying drawings required for describing the embodiments will be briefly described below. Apparently, the accompanying drawings described below merely illustrate some embodiments of this application, and those of ordinary skill in the art may derive other embodiments from these accompanying drawings.
FIG. 1 is a schematic cross-sectional diagram of a structure of a positive electrode plate according to an embodiment of this application;
FIG. 2 is an optical microscope image of a dotted first coating with A₁/A₃ of 0.74 in Example 30 of this application;
FIG. 3 is an optical microscope image of a dotted first coating with A₁/A₃ of 0.84 in Example 31 of this application; and
FIG. 4 is an optical microscope image of a dotted first coating with A₁/A₃ of 0.88 in Example 1 of this application.

Reference signs: positive electrode current collector 10, first coating 11, second coating 12, and coating 20.

### DETAILED DESCRIPTION OF EMBODIMENTS

The technical solutions in the embodiments of this application will be clearly and completely described below with reference to the accompanying drawings in the embodiments of this application. Apparently, the described embodiments are only a part of the embodiments of this application, rather than all the embodiments. Based on the embodiments in this application, all other embodiments obtained by those of ordinary skill in the art based on this application fall within the scope of protection of this application.

It should be noted that in the specific embodiments of this application, a lithium-ion battery is used as an example of a secondary battery to explain this application, but the secondary battery of this application is not limited thereto. The specific technical solution is as follows.

A first aspect of this application provides a secondary battery, including a positive electrode plate, where the positive electrode plate includes a positive electrode current collector and a coating disposed on at least one surface of the positive electrode current collector, the coating includes a first coating and a second coating, and along a thickness direction of the positive electrode plate, the first coating is disposed between the positive electrode current collector and the second coating, where the first coating includes an inorganic material, a conductive agent, a binder, and a dispersant; based on total mass of the first coating, a mass percentage of the inorganic material is w₁, where 15%≤w₁≤50%, a mass percentage of the conductive agent is w₂, where 15%<w₂≤40%, a mass percentage of the binder is w₃, where 30%≤w₃≤50%, and a mass percentage of the dispersant is w₄, where 0≤w₄≤5%.

For example, the value of w₁ may be 15%, 20%, 25%, 30%, 35%, 40%, 45%, 50%, or in a range defined by any two of these values. The range of w₁ may be 15% to 50%, 15% to 45%, 20% to 40%, 25% to 35%, and any range, as well as sub-ranges therein. The value of w₂ may be 16%, 20%, 25%, 30%, 35%, 40%, or in a range defined by any two of these values. The range of w₂ may be 15% to 40% (excluding the endpoint value of 15%), 16% to 35%, 16% to 30%, 20% to 25%, and any range, as well as sub-ranges therein. The value of w₃ may be 30%, 35%, 40%, 45%, 50%, or in a range defined by any two of these values. The range of w₃ may be 30% to 50%, 30% to 45%, 35% to 45%, 30% to 40%, 40% to 50%, and any range, as well as sub-ranges therein. The value of w₄ may be 0, 1%, 2%, 3%, 4%, 5%, or in a range defined by any two of these values. The range of w₄ may be 0 to 5%, 1% to 4%, 1% to 3%, 2% to 4%, 2% to 5%, and any range, as well as sub-ranges therein.

For ease of understanding, in this application, the length direction of the positive electrode plate is defined as X, and the thickness direction of the positive electrode plate is defined as Z. It should be understood that these definitions of directions are intended to conveniently describe this application, and the directions defined in this application may be understood according to the relative positions of the drawings and actual product elements. Moreover, the length directions and thickness directions of the positive electrode current collector, the coating, the first coating, and the second coating are the same as those of the positive electrode plate.

The aforementioned "coating disposed on at least one surface of the positive electrode current collector" means that the coating (including the first coating and the second coating) may be disposed on one surface of the positive electrode current collector along its thickness direction, or may be disposed on two surfaces of the positive electrode current collector along its thickness direction. It should be noted that the "surface" herein may be the entire area of the surface of the positive electrode current collector or a partial area of the surface of the positive electrode current collector, which is not particularly limited in this application, as long as the purpose of this application can be achieved.

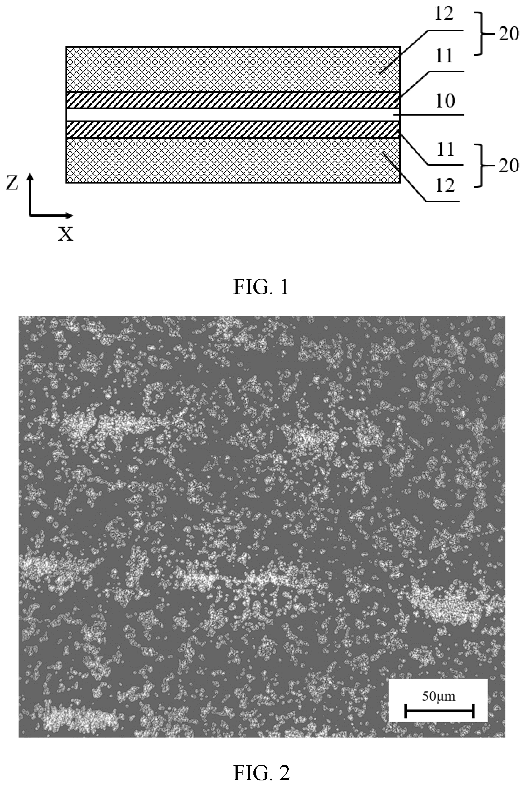

As shown in FIG. 1, the positive electrode plate includes a positive electrode current collector 10 and a coating 20. The coating 20 is disposed on two surfaces of the positive electrode current collector 10. The coating 20 includes a first coating 11 and a second coating 12. The first coating 11 is disposed between the positive electrode current collector 10 and the second coating 12. Certainly, it can be understood that in some embodiments of this application, the coating 20 is disposed on one surface of the positive electrode current collector 10.

The secondary battery in this application includes a positive electrode plate. The positive electrode plate includes a positive electrode current collector and a coating disposed on at least one surface of the positive electrode current collector. The coating includes a second coating and a first coating disposed between the second coating and the positive electrode current collector. In this application, the electrical performance and safety performance of the secondary battery can be better balanced by controlling w₁, w₂, w₃, and w₄ within the foregoing ranges. To be specific, the positive electrode plate has high electrical conductivity and thermal stability. On the one hand, this ensures that the secondary battery has low direct current resistance and high rate performance and cycling performance. On the other hand, when the secondary battery is subjected to mechanical abuse, thermal runaway can be delayed, and especially the risk of internal short circuit can be reduced when the secondary battery is punctured, so that the secondary battery has high drop performance, impact performance, and puncture performance, especially the puncture performance. In addition, the bonding force between the second coating and the positive electrode current collector can be effectively increased. In the case of mechanical abuse, the second coating is less likely to peel off from the surface of the positive electrode current collector, ensuring an electron pathway between the second coating and the positive electrode current collector. This helps reduce the risk of internal short circuit when the secondary battery is subjected to mechanical abuse. Furthermore, sufficient bonding force between the second coating and the positive electrode current collector also helps further reduce the direct current resistance of the secondary battery and improve the rate performance and cycling performance. Specifically, this is reflected in the following aspects: (1) helping reduce the contact resistance between the coating and the positive electrode current collector and reduce the direct current resistance; (2) capable of reducing the local shedding of the second coating during high-rate charging and discharging of the secondary battery, ensuring the continuity of the electron conduction path, reducing polarization, and reducing capacity attenuation; and (3) capable of reducing the shedding of the active material during the cyclic charging and discharging of the secondary battery, reducing the loss of effective active material, and reducing capacity attenuation. Therefore, in addition to reduced direct current resistance and improved rate performance and cycling performance, the secondary battery of this application increases the bonding force between the second coating and the positive electrode current collector, and improves the drop performance, impact performance, and puncture performance of the secondary battery, thereby improving the electrical performance and safety performance of the secondary battery.

In one or more embodiments of this application, a sum of resistances of the positive electrode current collector and the first coating is R₁ Ω/mm², where 0.001≤R₁≤0.5, optionally 0.1≤R₁≤0.3; and/or a resistance of the positive electrode plate is R₂ Ω/mm², where 0.1≤R₂≤4, optionally 1≤R₂≤3. For example, the value of R₁ may be 0.001, 0.005, 0.01, 0.05, 0.1, 0.15, 0.2, 0.25, 0.3, 0.35, 0.4, 0.45, 0.5, or in a range defined by any two of these values. The value range of R₁ may be 0.001 to 0.5, 0.01 to 0.45, 0.1 to 0.4, 0.2 to 0.4, 0.3 to 0.4, 0.1 to 0.3, and any range, as well as sub-ranges therein. The value of R₂ may be 0.1, 0.2, 0.5, 1, 1.5, 2, 2.5, 3, 3.5, 4, or in a range defined by any two of these values. The value range of R₂ may be 0.1 to 4, 0.5 to 4, 1 to 4, 2 to 4, 3 to 4, 1 to 3, and any range, as well as sub-ranges therein. Controlling R₁ and R₂ within these ranges helps further improve the electrical conductivity and thermal stability of the positive electrode plate. In addition, when the secondary battery is subjected to mechanical abuse, thermal runaway is more effectively delayed and internal short circuit diffusion is suppressed. Furthermore, it also helps increase the bonding force between the second coating and the positive electrode current collector, further reduce the contact resistance between the positive electrode current collector and the coating, and reduce the shedding of the second coating or active material during cyclic charging and discharging, thereby reducing the direct current internal resistance of the secondary battery and improving the cycling performance and rate performance. Therefore, R₁ and R₂ within those ranges help further reduce the direct current internal resistance of the secondary battery and improve its cycling performance and rate performance, while further improving the drop performance, impact performance, and puncture performance of the secondary battery, thereby better balancing the electrical performance and safety performance of the battery.

In this application, it can be understood that when the coating 20 (including the first coating 11 and the second coating 12) is disposed on only one surface of the positive electrode current collector, R₁ refers to the sum of the resistances of the positive electrode current collector 10 and the first coating 11 disposed on one surface of the positive electrode current collector 10, and R₂ refers to the sum of the resistances of the positive electrode current collector 10 and the coating 20 (including the first coating 11 and the second coating 12) disposed on one surface of the positive electrode current collector 10. When the coating 20 (including the first coating 11 and the second coating 12) is disposed on both surfaces of the positive electrode current collector 10, R₁ refers to the sum of the resistances of the positive electrode current collector 10 and the first coating 11 disposed on both surfaces of the positive electrode current collector, and R₂ refers to the sum of the resistances of the positive electrode current collector 10 and the coating 20 (including the first coating 11 and the second coating 12) disposed on both surfaces of the positive electrode current collector.

The way of controlling R₁ and R₂ is not particularly limited in this application, as long as the purpose of this application can be achieved. For example, R₁ and R₂ may be controlled by adjusting the slurry formulation of the first coating, the thickness of the first coating, the surface density of the first coating, the ratio of the orthographic projection area of the first coating on the surface of the positive electrode current collector to the area of the positive electrode current collector, or the like. For example, during preparation of the first coating slurry, R₁ and R₂ can be increased by increasing w₁ and decreasing w₂, with w₃, w₄, and other conditions unchanged, and R₁ and R₂ can be reduced conversely. Optionally, during application of the first coating slurry on the surface of the positive electrode current collector, R₁ and R₂ can be increased by increasing the coating thickness of the first coating, with other conditions unchanged, and R₁ and R₂ can be decreased conversely. Optionally, R₁ and R₂ can be increased by increasing the surface density of the first coating increases, with other conditions unchanged, and R₁ and R₂ can be reduced conversely. Optionally, R₂ can be reduced by increasing the ratio of the orthographic projection area of the first coating on the surface of the positive electrode current collector to the area of the positive electrode current collector, with other conditions unchanged. As the area ratio increases, R₂ tends to stabilize and R₁ remains basically unchanged. Conversely, R₂ increases and R₁ remains basically unchanged. When the area ratio is excessively low, R₁ is increased significantly.

In one or more embodiments of this application, 35%≤w₁≤50%. Controlling the mass percentage w₁ of the inorganic material in the first coating within this preferred range helps further improve the drop performance, impact performance, and puncture performance of the secondary battery while ensuring that the secondary battery has low direct current resistance and high cycling performance and rate performance. This improves the electrical performance and safety performance of the secondary battery.

In one or more embodiments of this application, 15%<w₂≤25%. Controlling the mass percentage w₂ of the conductive agent in the first coating within this preferred range helps further reduce the direct current resistance of the secondary battery and improve the cycling performance and rate performance of the secondary battery while improving the drop performance, impact performance, and puncture performance of the secondary battery, thereby improving the electrical performance and safety performance of the secondary battery.

In one or more embodiments of this application, a sum of thermal conductivities of the positive electrode current collector and the first coating is λ W/(m·K), where 0.55≤λ≤0.8. For example, the value of λ may be 0.55, 0.6, 0.65, 0.7, 0.75, 0.8, or in a range defined by any two of these values. The value range of λ may be 0.55 to 0.8, 0.6 to 0.8, 0.7 to 0.8, 0.55 to 0.75, 0.55 to 0.65, 0.6 to 0.7, 0.65 to 0.75, and any range, as well as sub-ranges therein. By controlling the thermal conductivity λ within this range, when the secondary battery is subjected to mechanical abuse, especially in the case of a puncture, heat can quickly diffuse from a local hot spot (such as the puncture point) to prevent a sudden rise in local temperature. This reduces the risk of short circuit and thermal runaway, delays the failure of the secondary battery, effectively improves the drop performance, impact performance, and puncture performance of the secondary battery, thereby improving the safety performance of the secondary battery.

In this application, when the coating 20 (including the first coating 11 and the second coating 12) is disposed on only one surface of the positive electrode current collector, λ refers to the sum of the thermal conductivities of the positive electrode current collector 10 and the first coating 11 disposed on one surface of the positive electrode current collector. When the coating 20 (including the first coating 11 and the second coating 12) is disposed on both surfaces of the positive electrode current collector, λ refers to the sum of the thermal conductivities of the positive electrode current collector 10 and the first coating 11 disposed on both surfaces of the positive electrode current collector.

The way of controlling the thermal conductivity λ is not particularly limited in this application, as long as the purpose of this application can be achieved. For example, the thermal conductivity λ may be controlled by adjusting the slurry formulation of the first coating, the surface density of the first coating, or the like. For example, during preparation of the first coating slurry, λ can be increased by decreasing w₁ and increasing w₂, with w₃, w₄, and other conditions unchanged, and λ can be decreased conversely. Alternatively, during application of the first coating slurry on the surface of the positive electrode current collector, λ can be increased by increasing the surface density of the first coating, with other conditions unchanged, and λ can be decreased conversely.

In one or more embodiments of this application, a sum of stiffnesses of the positive electrode current collector 10 and the first coating 11 is S₁ mN·m, where 0.03≤S₁≤0.25. For example, the value of S₁ may be 0.03, 0.05, 0.10, 0.15, 0.20, 0.25, or in a range defined by any two of these values. The value range of S₁ may be 0.03 to 0.25, 0.05 to 0.25, 0.10 to 0.25, 0.15 to 0.25, 0.03 to 0.20, 0.03 to 0.15, 0.03 to 0.10, 0.05 to 0.20, and any range, as well as sub-ranges therein. Stiffness reflects the ability of a material to resist bending or deformation. When S₁ is controlled within this range, the first coating serves as a skeleton to provide support. During a puncture, this helps delay the direct contact between the positive electrode and the negative electrode, and improve the drop performance, impact performance, and puncture performance of the secondary battery, thereby improving the safety performance of the secondary battery.

In this application, when the coating 20 (including the first coating 11 and the second coating 12) is disposed on only one surface of the positive electrode current collector, S₁ refers to the sum of the stiffnesses of the positive electrode current collector 10 and the first coating 11 disposed on one surface of the positive electrode current collector. When the coating 20 (including the first coating 11 and the second coating 12) is disposed on both surfaces of the positive electrode current collector, S₁ refers to the sum of the stiffnesses of the positive electrode current collector 10 and the first coating 11 disposed on both surfaces of the positive electrode current collector.

The way of controlling the stiffness S₁ is not particularly limited in this application, as long as the purpose of this application can be achieved. For example, the stiffness S₁ may be controlled by adjusting the slurry formulation of the first coating, the thickness of the first coating, the surface density of the first coating, or the like. For example, during preparation of the first coating slurry, S₁ can be increased by increasing w₁ and decreasing w₂, with w₃, w₄, and other conditions unchanged, and S₁ can be decreased conversely. Optionally, S₁ can be increased by increasing the surface density of the first coating, with other conditions unchanged, and S₁ can be decreased conversely. Optionally, S₁ can be increased by increasing the thickness of the first coating, with other conditions unchanged, and S₁ can be decreased conversely.

In one or more embodiments of this application, a stiffness of the positive electrode plate is S₂ mN·m, where 0.01≤S₂≤0.7. For example, the value of S₂ may be 0.01, 0.1, 0.2, 0.3, 0.4, 0.5, 0.6, 0.7, or in a range defined by any two of these values. The value range of S₂ may be 0.01 to 0.7, 0.01 to 0.5, 0.01 to 0.4, 0.01 to 0.3, 0.01 to 0.2, 0.1 to 0.7, 0.2 to 0.5, 0.3 to 0.4, and any range, as well as sub-ranges therein. When the stiffness S₂ of the positive electrode plate is controlled within this range, the stiffness S₂ of the positive electrode plate is moderate. On the one hand, this helps resist external pressure, making the positive electrode plate less prone to breakage and delaying the occurrence of internal short circuit. In the case of drop, the active material is less likely to fall off, reducing the risk of internal short circuit. In addition, during a puncture, fewer cracks or fragments are generated, reducing separator puncture or direct contact between electrode plates caused by deformation, and delaying thermal runaway. On the other hand, moderate stiffness helps ensure the stability of the positive electrode plate during electrolyte infiltration and lithium ion diffusion, thereby ensuring the kinetic performance of the positive electrode plate. In addition, this helps improve the structural stability of the positive electrode plate during charging and discharging and extend the cycle life of the secondary battery. Therefore, when the stiffness S₂ of the positive electrode plate is within this range, it helps further reduce the direct current resistance of the secondary battery and improve the rate performance and cycling performance while improving the drop performance, impact performance, and puncture performance of the secondary battery, thereby improving the electrical performance and safety performance of the secondary battery.

In this application, when the coating 20 (including the first coating 11 and the second coating 12) is disposed on only one surface of the positive electrode current collector 10, S₂ refers to the sum of the stiffnesses of the positive electrode current collector 10 and the coating 20 disposed on one surface of the positive electrode current collector. When the coating 20 (including the first coating 11 and the second coating 12) is disposed on both surfaces of the positive electrode current collector, S₂ refers to the sum of the stiffnesses of the positive electrode current collector 10 and the coating 20 disposed on both surfaces of the positive electrode current collector.

The way of controlling stiffness S₂ is not particularly limited in this application, as long as the purpose of this application can be achieved. For example, the stiffness S₂ may be controlled by adjusting the thickness of the second coating, the surface density of the second coating, the orthographic projection area of the second coating on the surface of the positive electrode current collector, or the like. For example, during application of the second coating slurry on the surface of the first coating away from the positive electrode current collector, S₂ can be decreased by decreasing the coating thickness of the second coating, with other conditions unchanged, and S₂ can be increased conversely. Optionally, S₂ can be increased by decreasing the surface density of the second coating, with other conditions unchanged, and S₂ can be decreased conversely. Optionally, S₂ can be increased by decreasing the orthographic projection area of the second coating on the surface of the positive electrode current collector, with other conditions unchanged, and S₂ can be decreased conversely.

In one or more embodiments of this application, a peel strength of the second coating 12 is P N/m, where 10≤P≤20. For example, the value of P may be 10, 12, 14, 16, 18, 20, or in a range defined by any two of these values. The value range of P may be 10 to 20, 12 to 18, 10 to 18, 10 to 16, 12 to 20, 14 to 20, 16 to 20, and any range, as well as sub-ranges therein. Controlling the peel strength P of the second coating within this range helps make the second coating bonded more firmly with the positive electrode current collector. In this case, the second coating is not prone to local peeling during charging and discharging of the secondary battery, ensuring a stable electron conduction path, reducing the direct current resistance of the secondary battery, and improving the rate performance and cycling performance. In addition, when the secondary battery is subjected to mechanical abuse, the second coating is also not prone to peeling, reducing the risk of internal short circuit and thermal runaway, and improving the drop performance, impact performance, and puncture performance of the secondary battery, thereby improving the electrical performance and safety performance of the secondary battery.

The way of controlling the peel strength P is not particularly limited in this application, as long as the purpose of this application can be achieved. For example, the peel strength P may be controlled by adjusting the mass percentage of the binder in the second coating, the type of binder in the second coating, the percentage of the conductive agent in the second coating, the thickness of the second coating, or the like. For example, during preparation of the first coating slurry, P can be increased by increasing the mass percentage of the binder in the second coating, with other conditions unchanged, and P can be decreased conversely.

In one or more embodiments of this application, the inorganic material includes at least one of boehmite, aluminum oxide, aluminosilicate, silicon dioxide, hydrotalcite, kaolin, or titanate nanoparticles. When these inorganic materials are selected, the surface roughness of the positive electrode current collector can be improved to a certain extent, providing more mechanical anchoring points and enhancing the adhesion of the binder. In addition, the inorganic materials can further form a stronger bonding force with the positive electrode current collector, thereby improving the peel strength of the second coating. This helps reduce the direct current resistance of the secondary battery and improve the rate performance and cycling performance, while improving the drop performance, impact performance, and puncture performance of the secondary battery, thereby improving the electrical performance and safety performance of the secondary battery.

In one or more embodiments of this application, the conductive agent includes at least one of carbon black or carbon nanotubes. The carbon black may include but is not limited to acetylene black and/or Ketjen black, and the carbon nanotube may include but is not limited to a single-walled carbon nanotube and/or a multi-walled carbon nanotube. When these conductive agents are selected, the electron conduction performance of the first coating is improved. This ensures charge transfer between the second coating and the positive electrode current collector, reduces the direct current resistance of the secondary battery, and improves the rate performance and cycling performance, thereby improving the electrical performance of the secondary battery.

In one or more embodiments of this application, the binder includes at least one of polyacrylic acid, sodium polyacrylate, lithium polyacrylate, polyvinyl alcohol, polyethylene oxide, styrene-butadiene resin, sodium alginate, or chitosan. These binders help increase the bonding force between the second coating and the positive electrode current collector to prevent the coating from peeling or falling off during cyclic charging and discharging of the secondary battery or in the case of mechanical abuse, so that the positive electrode plate has a higher structural stability. This reduces the direct current resistance of the secondary battery and improves the rate performance and cycling performance, while improving the drop performance, impact performance, and puncture performance of the secondary battery, thereby improving the electrical performance and safety performance of the secondary battery.

In one or more embodiments of this application, the dispersant includes at least one of sodium carboxymethyl cellulose or lithium carboxymethyl cellulose. These dispersants help improve the coating quality of the first coating and reduce defects such as cracks and holes on a dried positive electrode plate, improving the consistency of the first coating.

In one or more embodiments of this application, a weight-average molecular weight of the binder is Mw g/mol, where 1×10⁴≤Mw≤5×10⁵. For example, the value of Mw may be 1×10⁴, 5×10⁴, 1×10⁵, 1.5×10⁵, 2×10⁵, 2.5×10⁵, 3×10⁵, 3.5×10⁵, 4×10⁵, 4.5×10⁵, 5×10⁵, or in a range defined by any two of these values. The value range of Mw may be 1×10⁴ to 5×10⁵, 5×10⁴ to 4×10⁵, 1×10⁵ to 3×10⁵, 1×10⁵ to 4×10⁵, 2×10⁵ to 5×10⁵, 3×10⁵ to 5×10⁵, and any range, as well as sub-ranges therein. When Mw is within this range, the weight-average molecular weight of the binder is moderate. This not only helps increase the interfacial bonding force between the first coating, the positive electrode current collector, and the second coating, reducing the risk of delamination or shedding of the coating during mechanical abuse, but also helps ensure the stability and fluidity of the first coating slurry, improving the coating uniformity of the first coating slurry and reducing brittle fracture caused by local stress concentration. In addition, it does not affect the electron conduction performance and lithium ion transport performance of the positive electrode plate. Therefore, when the weight-average molecular weight Mw of the binder is within this range, the secondary battery has low direct current resistance and high rate performance and cycling performance, as well as high drop performance, impact performance, and puncture performance, thereby improving the electrical performance and safety performance of the secondary battery.

In one or more embodiments of this application, an average particle size of the carbon black is D₁ µm, where 0.5≤D₁≤4. For example, the value of D₁ may be 0.5, 1, 1.5, 2, 2.5, 3, 3.5, 4, or in a range defined by any two of these values. The value range of D₁ may be 0.5 to 4, 1 to 4, 2 to 4, 3 to 4, 1 to 3, 1.5 to 3.5, 0.5 to 3, 0.5 to 2, and any range, as well as sub-ranges therein. When D₁ is controlled within this range, the average particle size of the carbon black is moderate. This helps form a dense conductive network and leave enough pores in the first coating to ensure the smooth transport of lithium ions. In this case, the secondary battery has low direct current resistance and high rate performance and cycling performance, thereby improving the electrical performance of the secondary battery.

In one or more embodiments of this application, an average tube diameter of the carbon nanotube is D₂ nm, where 2≤D₂≤5, and an average tube length of the carbon nanotube is L µm, where 1≤L≤2. For example, the value of D₂ may be 2, 2.5, 3, 3.5, 4, 4.5, 5, or in a range defined by any two of these values. The value range of D₂ may be 2 to 5, 2 to 4, 3 to 5, 3 to 4, and any range, as well as sub-ranges therein. The value of L may be 1, 1.2, 1.4, 1.6, 1.8, 2, or in a range defined by any two of these values. The value range of L may be 1 to 2, 1 to 1.6, 1.2 to 1.8, 1.4 to 2, and any range, as well as sub-ranges therein. When D₂ and L are within these ranges, the aspect ratio of the carbon nanotubes is moderate. This helps form a denser conductive network, reduce the contact resistance and direct current resistance of the electrode, and improve electron transport efficiency. In this case, the secondary battery has low direct current resistance and high rate performance and cycling performance, thereby improving the electrical performance of the secondary battery.

In one or more embodiments of this application, a specific surface area of the conductive agent is B m²/g, where 60≤B≤90. For example, the value of B may be 60, 65, 70, 75, 80, 85, 90, or in a range defined by any two of these values. The value range of B may be 60 to 90, 65 to 85, 70 to 80, 60 to 80, 60 to 70, 70 to 90, 80 to 90, and any range, as well as sub-ranges therein. When B is within this range, a dense conductive network can be formed, shortening the electron conduction path and leaving enough pores to ensure efficient ion transport. In this case, the secondary battery has low direct current resistance and high rate performance and cycling performance, thereby improving the electrical performance of the secondary battery.

In one or more embodiments of this application, a single-sided thickness of the first coating 11 is T₁ µm, where 0.5≤T₁≤1.5. For example, the value of T₁ may be 0.5, 0.7, 0.9, 1.1, 1.3, 1.5, or in a range defined by any two of these values. The value range of T₁ may be 0.5 to 1.5, 0.7 to 1.3, 0.9 to 1.3, 0.5 to 1.1, 0.9 to 1.5, and any range, as well as sub-ranges therein. Controlling T₁ within this range helps protect the secondary battery from mechanical abuse and suppress thermal runaway, without hindering the transport of active ions (such as lithium ions) and the conduction of electrons, so that the secondary battery has low direct current resistance and high rate performance and cycling performance, as well as high drop performance, impact performance, and puncture performance. In addition, it helps reduce the loss of volumetric energy density of the secondary battery, thereby improving the electrical performance and safety performance of the secondary battery.

In one or more embodiments of this application, a single-sided thickness of the second coating 12 is T₂ µm, where 40≤T₂≤180. For example, the value of T₂ may be 40, 60, 80, 100, 120, 140, 160, 180, or in a range defined by any two of these values. The value range of T₂ may be 40 to 180, 60 to 160, 80 to 140, 100 to 180, 140 to 180, 40 to 140, and any range, as well as sub-ranges therein. Controlling T₂ within this range helps ensure the diffusion of active ions (such as lithium ions) and electron conduction, and reduce the stress concentration caused by volume changes of the positive electrode plate during cycling, thereby improving the rate performance and cycling performance of the secondary battery. In addition, when T₂ is within this range, the interfacial stress between the second coating and the positive electrode current collector is small, and the second coating is less likely to peel off when subjected to mechanical abuse. This can reduce the occurrence of internal short circuit, and reduce the heat release during thermal runaway of the secondary battery, improving the drop performance, impact performance, and puncture performance of the secondary battery. Furthermore, when T₂ is within this range, a second coating with more uniform thickness can be formed, reducing the risk of lithium precipitation.

The single-sided thickness in this application refers to the thickness of the first coating 11 or the second coating 12 located on either side of the positive electrode current collector 10.

In one or more embodiments of this application, an average particle size of the inorganic material is D₃ µm, where 0.5≤D₃≤2. For example, the value of D₃ may be 0.5, 0.6, 0.8, 1.0, 1.2, 1.4, 1.6, 1.8, 2, or in a range defined by any two of these values. The value range of D₃ may be 0.5 to 2, 0.6 to 1.8, 0.8 to 1.4, 0.5 to 1.6, 0.5 to 1.2, 0.8 to 2, 1.2 to 2, and any range, as well as sub-ranges therein. First, controlling D₃ within this range helps form a denser protective structure, delay electrolyte penetration and heat conduction, and effectively hinder heat transfer in the early stage of thermal runaway caused by mechanical abuse, reducing the diffusion speed of thermal runaway. Second, an area of contact between the inorganic material particles, the positive electrode current collector, and the second coating is large, and the interfacial adhesion is greater, making them less likely to delaminate during mechanical abuse and maintaining the barrier effect of the first coating. Third, the contact resistance between the inorganic material particles is low, the electron conduction path is shorter and continuous, which helps reduce the direct current resistance of the secondary battery. In addition, this helps shorten the ion diffusion path, improving the ion transport efficiency during high-rate discharging and improving the rate performance of the secondary battery. Furthermore, this helps improve the interfacial compatibility between the inorganic material particles and the second coating, reduce the shedding and pulverization of the active material, and improve the cycling performance of the secondary battery.

In one or more embodiments of this application, a single-sided thickness of the first coating 11 is T₁ µm, an average particle size of the inorganic material is D₃ µm, and 0.8≤T₁/D₃≤1.5. For example, the value of T₁/D₃ may be 0.8, 0.9, 1.0, 1.1, 1.2, 1.3, 1.4, 1.5, or in a range defined by any two of these values. The value range of T₁/D₃ may be 0.8 to 1.5, 0.9 to 1.4, 1 to 1.3, 0.8 to 1.2, 0.8 to 1, 1 to 1.5, 1.2 to 1.5, and any range, as well as sub-ranges therein. Controlling T₁ and D₃ to satisfy this relationship helps enable the first coating to play a role of protection without affecting the overall volumetric energy density of the secondary battery. This effectively delays thermal runaway, and ensures high ion transport efficiency and electron conductivity. In this case, the secondary battery has low direct current resistance and high rate performance and cycling performance, as well as high drop performance, impact performance, and puncture performance, thereby further improving the electrical performance and safety performance of the secondary battery.

In one or more embodiments of this application, along the thickness direction of the positive electrode plate, an orthographic projection area of the first coating 11 on a surface of the positive electrode current collector is A₁, an orthographic projection area of the second coating 12 on the surface of the positive electrode current collector is A₂, and A₁/A₂ is 0.9 to 1. For example, the value of A₁/A₂ may be 0.9, 0.92, 0.94, 0.96, 0.98, 1, or in a range defined by any two of these values. The value range of A₁/A₂ may be 0.9 to 1, 0.94 to 1, 0.96 to 1, 0.92 to 0.98, 0.9 to 0.96, 0.9 to 0.94, and any range, as well as sub-ranges therein. Within this range, it helps improve the mechanical protection effect of the first coating while ensuring the electrical performance of the secondary battery, reduce the direct contact between the positive electrode current collector and the negative electrode when the secondary battery is subjected to mechanical abuse, and reduce the risk of internal short circuit. In addition, it helps uniformly disperse mechanical stress, improve structural stability, reduce the peeling of the second coating from the positive electrode current collector, and delay the occurrence of thermal runaway.

In one or more embodiments of this application, along the thickness direction of the positive electrode plate, an area of the positive electrode current collector 10 is A₃, and A₁/A₃ is 0.6 to 0.9. For example, the value of A₁/A₃ may be 0.6, 0.65, 0.7, 0.75, 0.8, 0.85, 0.9, or in a range defined by any two of these values. The value range of A₁/A₃ may be 0.6 to 0.9, 0.65 to 0.85, 0.7 to 0.8, 0.6 to 0.8, 0.6 to 0.7, 0.7 to 0.9, 0.8 to 0.9, and any range, as well as sub-ranges therein. Within this range, it helps reduce the contact of the positive electrode current collector with the negative electrode during mechanical abuse while ensuring that the secondary battery has low direct current resistance and high cycling performance and rate performance, reduce the risk of short circuit, and better disperse mechanical stress. When the battery is subjected to external forces such as extrusion, the bonding between the second coating and the positive electrode current collector becomes greater, reducing the peeling of them, thereby improving the structural stability of the battery under mechanical abuse and delaying the occurrence of thermal runaway.

In one or more embodiments of this application, a surface density of the first coating 11 is ρ mg/cm², where 0.01≤ρ≤0.05. For example, the value of ρ may be 0.01, 0.02, 0.03, 0.04, 0.05, or in a range defined by any two of these values. The value range of ρ may be 0.01 to 0.05, 0.02 to 0.04, 0.03 to 0.04, 0.02 to 0.03, and any range, as well as sub-ranges therein. Controlling ρ within this range can ensure the flexibility of the first coating while providing a satisfying physical barrier effect, which not only helps improve the puncture performance of the secondary battery, but also makes the first coating less likely to peel off when the secondary battery is subjected to an impact. In addition, it can further effectively delay heat conduction, postpone the triggering of thermal runaway, and improve the drop performance, impact performance, and puncture performance of the secondary battery. Furthermore, the transport resistance of active ions and the conduction resistance of electrons are small, which helps further reduce the direct current resistance of the secondary battery and improve the rate performance and cycling performance of the secondary battery, thereby improving the electrical performance and safety performance of the secondary battery.

The way of controlling the surface density ρ is not particularly limited in this application, as long as the purpose of this application can be achieved. For example, during preparation of the positive electrode plate, the surface density ρ can be controlled by adjusting the solid content of the first coating slurry, the coating thickness of the first coating, A₁/A₃, or the like. For example, during application of the first coating slurry on the surface of the positive electrode current collector, the surface density ρ of the first coating can be increased by increasing the solid content of the first coating slurry, with other conditions unchanged, and the surface density ρ can be decreased conversely. Optionally, the surface density ρ of the first coating can be increased by increasing the coating thickness of the first coating, with other conditions unchanged, and the surface density ρ can be decreased conversely. Optionally, the surface density ρ of the first coating can be increased by increasing A₁/A₃, and the surface density ρ can be decreased conversely.

This application has no particular limitations on the positive electrode current collector, as long as the purpose of this application can be achieved. For example, it may include aluminum foil, aluminum alloy foil, or a composite current collector (for example, an aluminum-carbon composite current collector).

The second coating includes a positive active material. This application has no particular limitations on the positive active material, as long as the purpose of this application can be achieved. For example, the positive active material may include but is not limited to at least one of lithium nickel cobalt manganate (such as NCM811, NCM622, NCM523, or NCM111), lithium nickel cobalt aluminate, lithium iron phosphate, a lithium-rich manganese-based material, lithium cobalt oxide (LiCoO₂), lithium manganate oxide, lithium manganese iron phosphate, or lithium titanate.

The second coating 12 may further include a positive electrode conductive agent and a positive electrode binder. This application has no particular limitations on the types of the positive electrode conductive agent and the positive electrode binder, as long as the purpose of this application can be achieved. For example, the positive electrode conductive agent may include but is not limited to at least one of carbon black, a carbon nanotube, carbon fiber, flake graphite, graphene, a metal material, or a conductive polymer. The carbon fiber may include but is not limited to vapor-grown carbon fiber (VGCF) and/or nano carbon fiber, the metal material may include but is not limited to metal powder and/or metal fiber. Specifically, metal may include but is not limited to at least one of copper, nickel, aluminum, or silver. The conductive polymer may include but is not limited to at least one of a polyphenylene derivative, polyaniline, polythiophene, polyacetylene, or polypyrrole. The positive electrode binder may include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyamideimide, styrene-butadiene rubber, or polyvinylidene fluoride.

This application has no particular limitations on the mass ratio of the positive active material, the positive electrode conductive agent, and the positive electrode binder in the second coating 12. Those skilled in the art may select according to actual needs, as long as the purpose of this application can be achieved.

This application has no particular limitations on the thickness of the positive electrode current collector 10, as long as the purpose of this application can be achieved. For example, the thickness of the positive electrode current collector is 5 µm to 20 µm.

This application has no particular limitations on the preparation method of the positive electrode plate, as long as the purpose of this application can be achieved. For example, in some embodiments, the preparation method of the positive electrode plate includes but is not limited to the following steps: (1) preparing a first coating slurry and a second coating slurry; (2) applying the first coating slurry on one surface of the positive electrode current collector, and drying to obtain a positive electrode plate having the first coating on one side; applying the second coating slurry on the surface of the first coating away from the positive electrode current collector, and drying to obtain a positive electrode plate having the first coating and the second coating on one side; (3) repeating step (2) on the other surface of the positive electrode current collector to obtain a positive electrode plate having the first coating and the second coating on both sides; and (4) performing cold pressing and slitting to obtain the positive electrode plate.

This application has no particular limitations on the application methods of the above first coating 11 slurry and second coating 12 slurry, as long as the purpose of this application can be achieved. In one or more embodiments of this application, the first coating slurry may be applied on at least one surface of the positive electrode current collector using a method such as spray coating and transfer printing to form a dotted first coating. The dotted first coating helps reduce the negative impact of the first coating on the flexibility and energy density of the electrode plate, while providing sufficient anchoring and balancing the bonding between the positive electrode current collector and the second coating, the electrical conductivity of the positive electrode plate, and the interfacial impedance.

For example, applying the first coating slurry by spray coating includes but is not limited to the following steps: using a spray coating device to atomize the first coating slurry into tiny droplets and spraying the tiny droplets onto the surface of the positive electrode current collector. The spray coating device may be a spray gun, an ultrasonic spray coating device, or the like.

This application has no particular limitations on the process parameters of spray coating for the first coating slurry, as long as the purpose of this application can be achieved. For example, for the spray gun, the atomizing air pressure may be 0.5 MPa to 2 MPa, the nozzle diameter may be 0.15 mm to 0.35 mm, the slurry flow rate may be 200 mL/min to 1000 mL/min, the spraying distance may be 1.5 mm to 5 mm, the spray gun moving speed may be 0.5 cm/s to 3 cm/s, and the spray gun angle may be 10° to 30°. For the ultrasonic spray coating device, the vibration frequency may be 50 kHz to 200 kHz, the feeding rate may be 300 mL/min to 800 mL/min, the spraying distance may be 2 mm to 6 mm, and the stage moving speed may be 1 cm/s to 5 cm/s, where the stage is used to fix the current collector.

In this application, for the spray gun, A₁/A₃, the ratio of the orthographic projection area of the first coating on the surface of the positive electrode current collector to the area of the positive electrode current collector may be controlled by adjusting the atomizing air pressure, nozzle diameter, spray gun moving speed, solid content and viscosity of the first coating slurry, slurry flow rate, spraying distance, or the like. For example, when other parameters are constant, A₁/A₃ increases and then decreases as the atomizing air pressure increases; when other parameters are constant, A₁/A₃ increases and then tends to level off as the nozzle diameter increases; when other parameters are constant, A₁/A₃ becomes lower as the spray gun moves faster, and A₁/A₃ becomes higher as the spray gun moves slower; when other parameters are constant, A₁/A₃ increases and then decreases as the solid content of the first coating slurry increases; when other parameters are constant, A₁/A₃ increases and then decreases as the viscosity of the first coating slurry increases; when other parameters are constant, A₁/A₃ increases rapidly and then tends to level off (or slightly decreases) as the slurry flow rate increases; and when other parameters are constant, A₁/A₃ increases and then decreases as the spraying distance increases. For the ultrasonic spray coating device, A₁/A₃, the ratio of the orthographic projection area of the first coating on the surface of the positive electrode current collector to the area of the positive electrode current collector may be controlled by adjusting the vibration frequency, feeding rate, spraying distance, stage moving speed, or the like. For example, when other parameters are constant, A₁/A₃ increases and then decreases as the vibration frequency increases; when other parameters are constant, A₁/A₃ increases and then tends to level off as the feeding rate increases (A₁/A₃ may decrease slightly when the feeding rate is excessively high); when other parameters are constant, A₁/A₃ increases and then decreases as the spraying distance increases; and when other parameters are constant, A₁/A₃ becomes lower as the stage moves faster, and A₁/A₃ becomes higher as the stage moves slower.

This application has no particular limitations on the solid content and viscosity of the first coating slurry and second coating slurry, as long as the purpose of this application can be achieved. In one or more embodiments of this application, the solid content of the first coating slurry is 8% to 12%, and the viscosity of the first coating slurry is 100 mPa·s to 2000 mPa·s. For example, the solid content of the first coating slurry may be 8%, 9%, 10%, 11%, 12%, or in a range defined by any two of these values. The value range of the solid content may be 8% to 12%, 9% to 11%, 8% to 10%, 10% to 12%, and any range, as well as sub-ranges therein. The viscosity of the first coating slurry may be 100 mPa·s, 200 mPa·s, 400 mPa·s, 600 mPa·s, 800 mPa·s, 1000 mPa·s, 1200 mPa·s, 1400 mPa·s, 1600 mPa·s, 1800 mPa·s, 2000 mPa·s, or in a range defined by any two of these values. The value range of the viscosity may be 100 mPa·s to 2000 mPa·s, 400 mPa·s to 1600 mPa·s, 800 mPa·s to 1200 mPa·s, 100 mPa·s to 1000 mPa·s, 1000 mPa·s to 2000 mPa·s, and any range, as well as sub-ranges therein. This application has no particular limitations on the process parameters of the drying, cold pressing, and slitting, as long as the purpose of this application can be achieved.

In one or more embodiments of this application, the secondary battery includes a housing, an electrode assembly, and an electrolyte. The electrode assembly and the electrolyte are accommodated in the housing. This application has no particular limitations on the structure of the electrode assembly, as long as the purpose of this application can be achieved. For example, the electrode assembly has a laminated structure or a wound structure. The electrode assembly includes a negative electrode plate, a separator, and the positive electrode plate described above in this application. The separator is disposed between the positive electrode plate and the negative electrode plate to separate the positive electrode plate and the negative electrode plate, so as to prevent internal short circuit of the secondary battery and allow electrolyte ions to pass freely, without affecting electrochemical charging and discharging.

This application has no particular limitations on the negative electrode plate, as long as the purpose of this application can be achieved. For example, the negative electrode plate includes a negative electrode current collector and a negative electrode material layer disposed on at least one surface of the negative electrode current collector. The aforementioned "negative electrode material layer disposed on at least one surface of the negative electrode current collector" means that the negative electrode material layer may be disposed on one surface of the negative electrode current collector along its thickness direction, or may be disposed on two surfaces of the negative electrode current collector along its thickness direction. It should be noted that the "surface" herein may be the entire area of the surface of the negative electrode current collector or a partial area of the surface of the negative electrode current collector, which is not particularly limited in this application, as long as the purpose of this application can be achieved.

This application has no particular limitations on the negative electrode current collector, as long as the purpose of this application can be achieved. For example, the negative electrode current collector may include copper foil, copper alloy foil, nickel foil, stainless steel foil, titanium foil, nickel foam, copper foam, or the like.

The negative electrode material layer of this application includes a negative active material. This application has no particular limitations on the type of the negative active material, as long as the purpose of this application can be achieved. For example, the negative active material may include at least one of natural graphite, artificial graphite, a mesocarbon microbead (MCMB), hard carbon, soft carbon, silicon, a silicon-carbon composite, SiOₓ (0<x<2), a Li-Sn alloy, a Li-Sn-O alloy, Sn, SnO, SnO₂, spinel-structured lithium titanate Li₄Ti₅O₁₂, a Li-Al alloy, or metallic lithium.

This application has no particular limitations on the thicknesses of the negative electrode current collector and the negative electrode material layer, as long as the purpose of this application can be achieved. For example, the thickness of the negative electrode current collector is 4 µm to 15 µm, and the thickness of the negative electrode material layer is 30 µm to 170 µm.

Optionally, the negative electrode material layer may further include at least one of a negative electrode conductive agent, a negative electrode binder, and a thickener. This application has no particular limitations on the types of the negative electrode conductive agent, the negative electrode binder, and the thickener in the negative electrode material layer, as long as the purpose of this application can be achieved. For example, the negative electrode binder and the negative electrode conductive agent may include but are not limited to at least one of the optional substances of the foregoing second coating, and the thickener may include but is not limited to at least one of sodium carboxymethyl cellulose or lithium carboxymethyl cellulose.

This application has no particular limitations on the mass ratio of the negative active material, the negative electrode conductive agent, the negative electrode binder, and the thickener in the negative electrode material layer. Those skilled in the art may select according to actual needs, as long as the purpose of this application can be achieved.

Optionally, the negative electrode plate may further include a conductive layer, and the conductive layer is located between the negative electrode current collector and the negative electrode material layer. This application has no particular limitations on the composition of the conductive layer, which may be a conductive layer commonly used in the art. For example, the conductive layer includes a conductive agent and a binder. This application has no particular limitations on the conductive agent and the binder in the conductive layer, which, for example, may be at least one of the foregoing conductive agents and the foregoing binders.

This application has no particular limitations on the separator, as long as the purpose of this application can be achieved. For example, a material of the separator may include but is not limited to at least one of polyolefin (PO) mainly composed of polyethylene (PE) and polypropylene (PP), polyester (for example, a polyethylene terephthalate (PET) film), cellulose, polyimide (PI), polyamide (PA), spandex, or aramid. The type of the separator may include at least one of a woven film, a non-woven film, a microporous film, a composite film, a rolled film, or a spun film.

In one or more embodiments of this application, the separator may include a substrate layer and a surface treatment layer. The substrate layer may be a non-woven fabric, a film, or a composite film with a porous structure. The material of the substrate layer may include at least one of polyethylene, polypropylene, polyethylene terephthalate, or polyimide. Optionally, a polypropylene porous film, a polyethylene porous film, a polypropylene non-woven fabric, a polyethylene non-woven fabric, or a polypropylene-polyethylene-polypropylene porous composite film may be used.

Optionally, at least one surface of the substrate layer is provided with a surface treatment layer. The surface treatment layer may be a polymer layer or an inorganic layer, or a layer formed by mixing a polymer and an inorganic substance. For example, the inorganic layer includes inorganic particles and a binder. This application has no particular limitations on the inorganic particles. For example, the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. This application has no particular limitations on the binder. For example, the binder may be at least one of the foregoing binders. The polymer layer contains a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

In this application, the thickness of the separator is not particularly limited, as long as the purpose of this application can be achieved. For example, the thickness of the separator may be 3 µm to 30 µm.

This application has no particular limitations on the electrolyte, as long as the purpose of this application can be achieved. For example, the electrolyte contains a lithium salt and a non-aqueous solvent.

This application has no particular limitations on the type of the lithium salt, as long as the purpose of this application can be achieved. For example, the lithium salt may include but is not limited to at least one of lithium hexafluorophosphate (LiPF₆), lithium tetrafluoroborate (LiBF₄), lithium difluorophosphate (LiPO₂F₂), lithium bis(trifluoromethanesulfonyl)imide (LiTFSI), lithium bis(fluorosulfonyl)imide (LiFSI), lithium bis(oxalato)borate (LiBOB), or lithium difluoro(oxalato)borate (LiDFOB). This application does not limit the content of the lithium salt in the electrolyte, as long as the purpose of this application can be achieved.

This application has no particular limitations on the type of the non-aqueous solvent, as long as the purpose of this application can be achieved. For example, the non-aqueous solvent may include but is not limited to at least one of a carbonate compound, a carboxylate compound, an ether compounds, or another organic solvent. The carbonate compound may include but is not limited to at least one of a chain carbonate compounds, a cyclic carbonate compound, or a fluorinated carbonate compound. The chain carbonate compound may include but is not limited to at least one of dimethyl carbonate, diethyl carbonate, dipropyl carbonate, methyl propyl carbonate, ethyl propyl carbonate, or methyl ethyl carbonate. The cyclic carbonate compound may include but is not limited to at least one of ethylene carbonate, propylene carbonate, butylene carbonate, or vinylethylene carbonate. The fluorinated carbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include but is not limited to at least one of ethylene glycol dimethyl ether, dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, or tetrahydrofuran. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. This application has no particular limitations on the content of the non-aqueous solvent in the electrolyte, as long as the purpose of this application can be achieved.

This application has no particular limitations on the housing, which may be a housing known in the art, as long as the purpose of this application can be achieved. For example, the housing may be a hard shell housing or a flexible housing; where the hard shell housing may be made of metal or hard plastic. This application does not limit the type of metal, and a metal housing known in the art may be used, as long as the purpose of this application can be achieved. The flexible housing may be a metal plastic film, such as an aluminum plastic film, or a steel plastic film.

This application has no particular limitations on the type of the secondary battery, which may include any apparatus capable of an electrochemical reaction. For example, the secondary battery may include but is not limited to a lithium metal secondary battery, a lithium-ion secondary battery (a lithium-ion battery), a sodium-ion secondary battery (a sodium-ion battery), a lithium polymer secondary battery, and a lithium-ion polymer secondary battery.

This application has no particular limitations on the preparation method of the secondary battery. A preparation method known in the art may be selected, as long as the purpose of this application can be achieved. For example, the preparation method of the secondary battery includes but is not limited to the following steps.

The positive electrode plate, the separator, and the negative electrode plate are stacked in order, and wound or folded as needed to obtain an electrode assembly with a wound structure. The electrode assembly is placed in a housing, an electrolyte is injected into the housing, and the housing is sealed to obtain a secondary battery. Alternatively, the positive electrode plate, the separator, and the negative electrode plate are stacked in order, and then four corners of the entire laminated structure are fixed to obtain an electrode assembly with a laminated structure. The electrode assembly is placed in a housing, an electrolyte is injected into the housing, and the housing is sealed to obtain a secondary battery.

A third aspect of this application provides an electronic apparatus, including the secondary battery according to any one of the foregoing embodiments. Therefore, the electronic apparatus has high usability.

The electronic apparatus of this application is not particularly limited, and may be any electronic apparatus known in the prior art. For example, the electronic apparatus may include but is not limited to a notebook computer, a pen-input computer, a mobile computer, an e-book player, a portable telephone, a portable facsimile machine, a portable copier, a portable printer, a head-mounted stereo headphone, a video recorder, a liquid crystal television, a handheld cleaner, a portable CD player, a mini disc, a transceiver, an electronic notebook, a calculator, a memory card, a portable tape recorder, a radio, a backup power supply, a motor, an automobile, a motorcycle, a power-assisted bicycle, a bicycle, a lighting fixture, a toy, a gaming console, a clock, an electric tool, a flashlight, a camera, a household large battery, and a lithium-ion capacitor.

### Examples

Examples and comparative examples are used to describe the embodiments of this application in more detail. Various tests and evaluations are performed according to the following methods. In addition, unless otherwise specified, "parts" and "%" are based on mass.

### Test methods and equipment:

### Sampling method of positive electrode plate

A lithium-ion battery prepared in each example and comparative example was fully discharged. The battery was disassembled to obtain the positive electrode plate. The positive electrode plate was immersed in dimethyl carbonate (DMC) for 20 minutes, rinsed with dimethyl carbonate and acetone in sequence, and then placed in an oven and baked at 80°C for 12 hours to obtain a dried positive electrode plate.

### Test of T₁ and T₂

The dried positive electrode plate was prepared by ion polishing to obtain an electrode plate with a longitudinal cross-section (parallel to the thickness direction of the positive electrode plate). A ZEIS-SEM (Sigma-02-33) scanning electron microscope was used to measure the thickness T₁ of the first coating and the thickness T₂ of the second coating in the positive electrode plate. Five positions on the positive electrode plate were selected for measurement on each characteristic parameter, with adjacent measurement points spaced 2 mm to 3 mm apart. The five measured values were averaged to obtain T₁ and T₂, in units of µm.

### Test of D₁, D₂, D₃, and L

The dried positive electrode plate was prepared by ion polishing to obtain an electrode plate with a longitudinal cross-section (parallel to the thickness direction of the positive electrode plate). It should be particularly noted herein that: in the positive electrode plate, since the inorganic material, conductive agent, binder, and dispersant are mixed for use, in order to characterize the geometric sizes of the inorganic material and the conductive agent in the positive electrode plate more accurately, the following definitions are made to test and characterize the geometric sizes of the inorganic material and the conductive agent in the positive electrode plate.

A scanning electron microscope (ZEISS Sigma-02-33) device was used to test the longitudinal cross-section of the prepared electrode plate. Depending on the elemental analysis function of the scanning electron microscope, 100 particles containing marker elements of the inorganic material (such as Al, Si, Ti, Mg, Zn, and Ni) and 100 particles containing marker elements (C) of the conductive agent were selected. For quasi-spherical particles, the value of the longest distance between two points existing in each of the particles was used as the particle size of the particle. For elongated particles, the longest distance in the length direction of each of the particles was used as the length of the particle, and the diameter of the cross-section (the cross-section is perpendicular to the length direction) of each of the particles (when the conductive agent is a hollow cylindrical tubular particle, the diameter herein refers to the outer diameter of the cross-section) was used as the radial length of the particle. Image analysis software (such as ImageJ) was used to measure and count the sizes of the selected inorganic material particles and conductive agent particles. The average values were calculated respectively according to all size values of the inorganic material particles and all size values of the conductive agent particles obtained from the foregoing measurements, and then the average diameter, average length, or average particle size of the conductive agent, and the average particle size D₃ of the inorganic material were obtained. When the conductive agent was carbon black, the average particle size was D₁ µm. When the conductive agent was carbon nanotubes, the average tube diameter was D₂ nm, and the average tube length was L µm.

### Measurement of w₁, w₂, w₃, w₄, B, and Mw

A lithium-ion battery prepared in each example and comparative example is fully discharged. The battery was disassembled to obtain the positive electrode plate. The second coating in the positive electrode plate was scraped off to obtain an electrode plate under test having the first coating. The positive electrode plate only having the first coating was immersed in liquid nitrogen for 5 minutes to embrittlement. The first coating was scraped off with a blade to obtain first coating powder. The first coating powder was passed through a 400-mesh sieve (pore size of 38 µm) to remove positive electrode current collector fragments, and the sieved first coating powder was vacuum-dried at 60°C for 12 hours to remove electrolyte residues. Subsequently, bromoform (CHBr₃, ρ=2.89 g/cm³) and n-hexane (C₆H₁₄, ρ=0.66 g/cm³) were mixed at ratios of 9:1, 7:3, 4:6, and 2:8 to obtain mixed solutions of different densities, and the prepared mixed solutions of different densities were sequentially injected into different centrifuge tubes. 20 mg of the dried first coating powder was dispersed in 1 mL of isopropanol, and the resulting mixture was ultrasonicated for 10 minutes (at a power of 300 W) to obtain a first coating powder suspension. The first coating powder suspension was injected into the centrifuge tube. The mixed solution at the ratio of 9:1 was slowly injected using a syringe into the centrifuge tube containing the first coating powder suspension. After centrifugation at 2000 r/min for 120 minutes, based on the principle of density difference, the inorganic material was enriched in the lower layer of the centrifuge tube. The lower-layer solution containing the inorganic material was taken out with a pipette, and the remaining supernatant A (containing the dispersant, binder, and conductive agent) was used for subsequent separation. The mixed solution at the ratio of 7:3 was injected into the centrifuge tube containing supernatant A. After centrifugation at 2000 r/min for 120 minutes, based on the principle of density difference, the dispersant was enriched in the lower layer of the centrifuge tube. The lower-layer solution containing the dispersant was taken out with a pipette, and the remaining supernatant B (containing the binder and conductive agent) was used for subsequent separation. The mixed solution at the ratio of 4:6 was injected into the centrifuge tube containing supernatant B. After centrifugation at 2000 r/min for 120 minutes, based on the principle of density difference, the binder was enriched in the lower layer of the centrifuge tube. The lower-layer solution containing the binder was taken out with a pipette, and the remaining supernatant C (containing the conductive agent) was used for subsequent separation. Finally, the mixed solution at the ratio of 2:8 was injected into the centrifuge tube containing supernatant C. After centrifugation at 2000 r/min for 120 minutes, based on the principle of density difference, the conductive agent was enriched in the lower layer of the centrifuge tube. The lower-layer solution containing the conductive agent was taken out with a pipette. Solutions containing the inorganic material, dispersant, binder, and conductive agent were obtained in sequence. After vacuum drying, solid powders of the conductive agent, binder, dispersant, and inorganic material were obtained respectively. By means of weighing, the mass of the inorganic material was m₁ mg, the mass of the conductive agent was m₂ mg, the mass of the binder was m₃ mg, and the mass of the dispersant was m₄ mg. Then w₁=(m₁/20)×100%, w₂=(m₂/20)×100%, w₃=(m₃/20)×100%, and w₄=(m₄/20)×100%.

According to the national standard "Determination of the Specific Surface Area of Solid Substances by Gas Adsorption BET Method" (GB/T 19587-2017), a specific surface area analyzer (model: TristarII3020M) was used to test the specific surface area of the separated conductive agent using a nitrogen adsorption method to obtain the specific surface area B of the conductive agent, in units of m²/g.

Referring to the national standard GB/T 21863-2008 Gel Permeation Chromatography (GPC), in which tetrahydrofuran is used as the eluent. The weight-average molecular weight Mw of the binder was tested by gel permeation chromatography (instrument model: ACQUITY APC), in units of g/mol.

### Measurement of ρ

The second coating in the dried positive electrode plate was scraped off to obtain an electrode plate under test having the first coating. A sample of the electrode plate under test with an area of X cm² was cut and weighed on a balance to obtain a weight recorded as m₁, in units of mg. The first coating on the sample of the electrode plate under test was removed, and the positive electrode current collector was weighed on the balance to obtain a weight recorded as m₂, in units of mg.

For a negative electrode plate having the first coating on one side, ρ=(m₁-m₂)/X, in units of mg/cm²; or
For a negative electrode plate having the first coating on both sides, ρ=(m₁-m₂)/2X, in units of mg/cm².

### Measurement of P

The peel strength of the second coating was measured via a 180° peel test. The coating (including the first coating and the second coating) on one side of the dried positive electrode plate was scraped off to obtain an electrode plate under test having the coating on one side. The electrode plate under test was cut into a test strip of 15 mm×54 mm. A 15 mm×55 mm piece of double-sided tape (NITTO.NO5000NS) was applied on a steel plate, and the test strip was attached to the double-sided tape with the positive electrode current collector facing downward. A 15 mm×70 mm paper strip was attached to the test strip through the double-sided tape and bonded to the surface of the second coating away from the positive electrode current collector. The test strip was rolled over 8 times using a 2 kg hand roller to obtain the test sample. A tensile machine was used for testing. The test sample was fixed on the test table, and the paper strip was folded 180° upward and fixed by a clamp. Then the paper strip was pulled by the tensile machine at a speed of 50 mm/min until the second coating on the surface of the double-sided tape was separated from the positive electrode current collector, and the test was completed and the test data was saved. The peel strength P, in units of N/m, of the second coating was calculated according to the pulling force and the stretching displacement measured when the second coating was separated from the positive electrode current collector.

### Measurement of R₁ and R₂

The second coating in the dried positive electrode plate was scraped off to obtain an electrode plate under test only having the first coating. The electrode plate under test was cut into a size of 60 mm×80 mm. Subsequently, the thickness of the cut electrode plate under test was measured and tested using an IEST BER1200 electrode plate resistance tester under a test pressure of 400 kPa and a test duration of 15s, and the thickness of the cut electrode plate under test was recorded. After 12 values were obtained through testing, a test report was output. The 12 film resistance values were averaged to obtain the resistance R₁ of the first coating, in units of Ω/mm².

Similarly, the dried positive electrode plate was cut into a size of 60 mm×80 mm to obtain an electrode plate under test of the positive electrode plate. The electrode plate under test was tested according to the foregoing test method for resistance R₁ to obtain the resistance R₂ of the positive electrode plate, in units of Ω/mm².

It should be particularly noted herein that: when the coating (including the first coating and the second coating) is disposed on only one surface of the positive electrode current collector, R₁ refers to the sum of the resistances of the positive electrode current collector and the first coating disposed on one surface of the positive electrode current collector, and R₂ refers to the sum of the resistances of the positive electrode current collector and the coating disposed on one surface of the positive electrode current collector. When the coating is disposed on both surfaces of the positive electrode current collector, R₁ refers to the sum of the resistances of the positive electrode current collector and the first coating disposed on both surfaces of the positive electrode current collector, and R₂ refers to the sum of the resistances of the positive electrode current collector and the coating disposed on both surfaces of the positive electrode current collector.

### Measurement of S₁ and S₂

The second coating in the dried positive electrode plate was scraped off to obtain an electrode plate under test only having the first coating. The electrode plate under test was cut into a size of 38 mm×80 mm and clamped on a stiffness tester (PT-208 of Guangdong Beidou Precision Instrument Co., Ltd.), with one end fixed and the other end suspended, and a bending force was applied by the instrument. The sample bending length (that is, the distance from the fixed end to the end of the electrode plate under test) was set to 50 mm. The loading head was used to press down at a constant speed of 0.3 m/min to measure the stiffness of the electrode plate under test bent from 0° to 90°. The stiffness value was obtained through the built-in algorithm of the instrument. Four parallel samples are measured for each group, and the average value was taken to obtain the stiffness S₁ of the positive electrode current collector having the first coating, in units of mN·m.

Similarly, the dried positive electrode plate was cut into a size of 38 mm×80 mm to obtain an electrode plate under test of the positive electrode plate. The electrode plate under test was tested according to the test method for stiffness S₁. Four parallel samples were measured for each group, and the average value was taken to obtain the stiffness S₂ of the positive electrode plate, in units of mN·m.

It should be particularly noted herein that: when the coating is disposed on only one surface of the positive electrode current collector, S₁ refers to the sum of the stiffnesses of the positive electrode current collector and the first coating disposed on one surface of the positive electrode current collector, and S₂ refers to the sum of the stiffnesses of the positive electrode current collector and the coating disposed on one surface of the positive electrode current collector. When the coating was disposed on both surfaces of the positive electrode current collector, S₁ refers to the sum of the stiffnesses of the positive electrode current collector and the first coating disposed on both surfaces of the positive electrode current collector, and S₂ refers to the sum of the stiffnesses of the positive electrode current collector and the coating disposed on both surfaces of the positive electrode current collector.

### Measurement of λ

The second coating in the dried positive electrode plate was scraped off to obtain an electrode plate under test only having the first coating. The electrode plate under test was cut into a size of 30 mm×30 mm. The cut electrode plate under test was assembled into a sample in the order of heating plate, electrode plate under test, and then cooling plate. The sample was pre-pressed to a contact pressure of 0.02 MPa, and the electrode plate under test was heated to a predetermined temperature difference ΔT (the temperature difference herein refers to the temperature difference between the two sides of the electrode plate under test, in units of K) by the heating plate at a heating rate of less than or equal to 2°C/min. The temperature of the electrode plate under test was continuously monitored until the electrode plate under test satisfied the relationship: ΔT/T-average<0.5%. During a continuous monitoring period of 30 minutes, the electrode plate under test must satisfy this relationship, where T-average refers to the average temperature of the surface of the electrode plate under test close to the heating plate during the heating process and the continuous monitoring period. Subsequently, the heat flow value Q of the electrode plate under test after the temperature was maintained stable was measured by a heat flow sensor, in units of W. According to Fourier's law, the thermal conductivity was calculated as λ=(Q×Δx)/(A×ΔT), in units of W/(m·K), where A was the effective heat transfer area (that is, the actual area of contact between the electrode plate under test and the heating plate), in units of m², and Δx was the thickness of the sample, in units of m.

It should be particularly noted herein that: when the coating is disposed on only one surface of the positive electrode current collector, λ refers to the sum of the thermal conductivities of the positive electrode current collector and the first coating disposed on one surface of the positive electrode current collector. When the coating is disposed on both surfaces of the positive electrode current collector, λ refers to the sum of the thermal conductivities of the positive electrode current collector and the first coating disposed on both surfaces of the positive electrode current collector.

### Test of A₁/A₃

The second coating in the dried positive electrode plate was scraped off to obtain an electrode plate under test only having the first coating. The electrode plate under test was cut into a sample of 1 cm×1 cm. The surface of the sample was gently wiped with a dust-free cloth moistened with absolute ethanol, to remove dust and electrostatically adsorbed particles, and then the sample was dried. The dried sample was smoothly mounted on a glass slide, ensuring that there are no wrinkles. Using a KEYENCE KEYENCE optical microscope (model: VHX-S750E), the pixel size was calibrated with a standard scale, the magnification was set between 20x to 50x, the light source intensity ranged from 30% to 50%, the image resolution was 1920×1080 pixels, and 5 pictures were taken. Image analysis was performed on the pictures to obtain the coverage rate of the first coating in the 5 pictures respectively, and the average value was taken as the coverage rate of the sample, that is, A₁/A₃.

### Test of A₁/A₂

The length and width of the second coating on the dried positive electrode plate were measured using an OMM (optical measuring machine), A₁ was calculated. Then, the second coating was scraped off to obtain an electrode plate under test having the first coating, the length and width of the first coating were measured, A₂ was calculated, and then A₁/A₂ was calculated.

### Test of direct current resistance

At 25°C, the lithium-ion battery was charged to 3.3 V at a constant current of 0.5C, charged to a cutoff current of 0.2C at a constant voltage of 3.3 V, and left standing for 30 minutes. The battery was discharged at 0.1C for 1s and the voltage value was recorded as U₁, and then discharged at 1C for 360s and the voltage value was recorded as U₂. The charging and discharging steps were repeated 5 times. The direct current resistance R of the lithium-ion battery at 25°C was calculated using the following formula: R=(U₂-U₁)/(1C-0.1C), where "1C" refers to the current value in a case that the lithium-ion battery was completely discharged within 1 hour.

### Test of rate capacity retention rate

At 25°C, the lithium-ion battery was discharged to 2.5 V at a constant current of 0.5C, left standing for 5 minutes, charged to 3.3 V at a constant current of 0.5C, charged to a cutoff current of 0.2C at a constant voltage of 3.3 V, and then left standing for 30 minutes. The charging and discharging steps were repeated with the discharge rates adjusted to 0.5C and 1C to obtain the corresponding discharge capacities. The ratio of the discharge capacities at 0.5C and 1C was used as the basis for measuring the rate performance, so as to obtain the rate capacity retention rate, in units of %.

### Test of cycling performance

At 25°C, the lithium-ion battery was charged to 3.3 V at a constant current of 0.5C, charged to a cutoff current of 0.2C at a constant voltage of 3.3 V, and then discharged to 2.5 V at a constant current of 0.5C, which was recorded as the first-cycle discharge capacity. The lithium-ion battery was subjected to 500 cycles under the foregoing conditions, and the discharge capacity after 500 cycles was recorded. The cycling capacity retention rate was used to characterize the cycling performance of the lithium-ion battery. The higher the cycling capacity retention rate, the better the cycling performance of the lithium-ion battery. Cycling capacity retention rate (%)=(discharge capacity after 500 cycles/first-cycle discharge capacity)×100%.

### Puncture performance test

The appearance was checked and photographed before and after the test. The lithium-ion battery was placed in a 25°C thermostat and left standing for 30 minutes to maintain the lithium-ion battery at a constant temperature. The lithium-ion battery was charged to 3.5 V at a constant current of 0.5C, charged to a cutoff current of 0.2C at a constant voltage of 3.5 V, and left standing for 60 minutes. At this time, the lithium-ion battery was fully charged. The fully charged lithium-ion battery was transferred to a nail penetration tester, with the ambient temperature maintained at 25°C. A steel nail with a diameter of 5 mm and a taper of 45° was used to penetrate the center of the largest surface of the lithium-ion battery at a constant speed of 25 mm/s. The nail was retained for 10 minutes. The entire puncture test needs to be video-recorded. The nail is used once, and a new steel nail must be used for each lithium-ion battery test. The lithium-ion battery that did not catch fire or explode was recorded as passing the test. 20 lithium-ion batteries were tested in each group.

Puncture test pass rate=number of lithium-ion batteries that pass the puncture test/20. The higher the puncture test pass rate, the better the safety performance of the lithium-ion battery.

### Drop performance test

The lithium-ion battery to be tested was placed in a 25°C environment, charged to a voltage of 3.5 V at a constant current of 0.5C, charged to a cutoff current of 0.2C at a constant voltage of 3.5 V, and left standing for 60 minutes. At this time, the lithium-ion battery to be tested was fully charged. The fully charged lithium-ion battery was placed in a fixing fixture, and its appearance was checked and photographed before and after the test. Subsequently, the fully charged lithium-ion battery was dropped from a height of 1.8 m, landing once on each of the two sides and once on each of the 4 corners. A total of 7 rounds of testing were conducted, with 6 drop per round. The dropping sequence was: head->tail->top-right corner->bottom-right corner->top-left corner->bottom-left corner (at an angle of 45±15 degrees). The voltage and internal resistance of the lithium-ion battery were measured immediately after the drop test and 2 hours after the test. The criteria for passing the drop test were: no fire, no explosion, no smoke, no leakage, and voltage drop of less than 100 mV. 20 lithium-ion batteries were tested for each example or comparative example.

Drop test pass rate=number of lithium-ion batteries that pass the drop test/20. The higher the drop test pass rate, the better the safety performance of the lithium-ion battery.

### Impact performance test

In a 25°C environment, the lithium-ion battery was charged to 3.5 V at a current of 0.5C, charged to a cutoff current of 0.2C at a voltage of 3.5 V, and left standing for 60 minutes. At this time, the lithium-ion battery was fully charged. The two opposite surfaces with larger areas among the 6 surfaces of the fully charged lithium-ion battery were recorded as surface A and surface B, the first direction and the second directions were perpendicular to each other on surface B, and the dimension of surface B in the first direction was greater than that in the second direction. At 25°C, the fully charged lithium-ion battery was placed on the test table, and surface A of the lithium-ion battery was in direct contact with the test table. A round bar with a diameter of 15.8 mm was placed at the center of surface B of the lithium-ion battery. The axial direction of the round bar was perpendicular to the first direction and parallel to the second direction (intersecting perpendicularly with surface B of the lithium-ion battery). The midpoint of the round bar in the axial direction coincided with the center position of surface B. A 10 kg hammer was dropped in a vertical free-fall state from a height of 500 mm to impact the midpoint of the round bar. The criteria for passing the impact test: no fire, no explosion, no smoke, no leakage, no rupture, no deflation, and no disintegration. 20 lithium-ion batteries were tested in each group.

Impact test pass rate=number of lithium-ion batteries that pass the impact test/20. The higher the impact test pass rate, the better the safety performance of the lithium-ion battery.

### Example 1

### <Preparation of positive electrode plate>

A raw material including an inorganic material boehmite (average particle size D₃ of 1 µm), a conductive agent conductive carbon black (average particle size D₁ of 2 µm, specific surface area B of 70 m²/g), a binder sodium polyacrylate (PAA-Na, weight-average molecular weight Mw of 4×10⁵ g/mol), and a dispersant sodium carboxymethyl cellulose (CMC-Na) were added to water at a solid mass ratio of 40:16:42:2 for mixing, and stirred uniformly using a vacuum mixer to obtain a first coating slurry with a solid content of 10% and a viscosity of 200 mPa·s.

Raw materials including a positive active material lithium manganese iron phosphate (chemical formula of LiFe_{0.7}Mn_{0.3}PO₄) and a ternary material (chemical formula of LiNi_{0.8}Co_{0.1}Mn_{0.1}O₂), a conductive agent acetylene black, and a binder polyvinylidene fluoride were added to N-methylpyrrolidone (NMP) at a solid mass ratio of 67.9:29.1:2:1, and stirred uniformly using a vacuum mixer to obtain a second coating slurry with a solid content of 70%.

An aluminum foil with a surface tension of 40 Dyne/cm and a thickness of 13 µm was used as the positive electrode current collector. A dotted first coating was formed using the spray coating method. A₁/A₃, a ratio of the orthographic projection area of the first coating on the surface of the positive electrode current collector to the area of the positive electrode current collector, was 0.88. The specific steps included the following. A spray gun was used to atomize the first coating slurry into tiny droplets, and the tiny droplets were sprayed onto the surface of the positive electrode current collector. The atomizing air pressure was 2 MPa, the nozzle diameter was 0.25 mm, the slurry flow rate was 800 mL/min, the spraying distance was 3 mm, the spray gun moving speed was 2.5 cm/s, and the spray gun angle was 15°. Subsequently, the second coating slurry was applied on the surface of the first coating. A₁/A₂, the ratio of the orthographic projection area A₁ of the first coating on the surface of the positive electrode current collector to the orthographic projection area A₂ of the second coating on the surface of the positive electrode current collector was 1, and drying was performed. Then, the foregoing steps were repeated on the other surface of the aluminum foil to obtain a positive electrode plate having the first coating and the second coating on both sides. Then, after cold pressing, slitting, and tab welding, the positive electrode plate of this example was obtained. By controlling the coating amounts of the first coating slurry and the second coating slurry, the surface density ρ of the first coating was 0.03 mg/cm², the single-sided thickness T₁ of the first coating was 1 µm, and the single-sided thickness T₂ of the second coating was 60 µm. Then, T₁/D₃ was 1.

Based on total mass of the first coating, the mass percentage w₁ of boehmite was 40%, the mass percentage of conductive carbon black w₂ was 16%, the mass percentage of sodium polyacrylate w₃ was 42%, and the mass percentage of sodium carboxymethyl cellulose w₄ was 2%. Based on total mass of the second coating, the mass percentage of lithium manganese iron phosphate was 67.9%, the mass percentage of the ternary material was 29.1%, the mass percentage of the conductive agent was 2%, and the mass percentage of the binder was 1%.

### <Preparation of negative electrode plate>

Raw materials including a negative active material artificial graphite, a binder styrene-butadiene rubber (SBR), and a dispersant carboxymethyl cellulose (CMC) were added to deionized water at a solid mass ratio of 96:1.5:2.5 for mixing, and stirred uniformly using a vacuum mixer to obtain a negative electrode material layer slurry with a solid content of 55%.

A copper foil with a thickness of 10 µm was used as the negative electrode current collector. The negative electrode material layer slurry was uniformly applied on one surface of the copper foil, and dried to obtain a negative electrode plate having the negative electrode material layer on one side. Subsequently, the foregoing steps were repeated on the other surface of the copper foil to obtain a negative electrode plate having the negative electrode material layer on both sides. After cold pressing, slitting, and tab welding, the negative electrode plate of this example was obtained.

Based on the total mass of the negative electrode material layer, the mass percentage of artificial graphite was 96%, the mass percentage of styrene-butadiene rubber was 1.5%, and the mass percentage of carboxymethyl cellulose was 2.5%.

### <Preparation of electrolyte>

In an environment with a water content of less than 10 PPM, ethylene carbonate (EC) and propylene carbonate (PC) were mixed at a mass ratio of 3:1 to obtain an organic solvent, a lithium salt LiPF₆ was added to the organic solvent, and the resulting mixture was mixed uniformly to obtain an electrolyte. Based on mass of the electrolyte, the mass percentage of the lithium salt was 30%, and the rest was the organic solvent.

### <Separator>

A porous polyethylene film with a thickness of 7 µm (provided by Celgard) was used as the separator.

### <Preparation of lithium-ion battery>

The prepared positive electrode plate, separator, and negative electrode plate were stacked in order, so that the separator was located between the positive electrode plate and the negative electrode plate for isolation purposes, and they were wound to obtain an electrode assembly. The electrode assembly was placed into an aluminum-plastic film packaging bag, moisture was removed at 80°C, the prepared electrolyte was injected, and a lithium-ion battery was obtained through processes such as vacuum packaging, standing, formation, degassing, and edge cutting.

### Example 2

It is the same as Example 1 except that the relevant parameters are adjusted according to Table 1.

### Examples 3 to 6

They are the same as Example 2 except that the relevant parameters are adjusted according to Table 1.

### Example 7

It is the same as Example 1 except that the relevant parameters are adjusted according to Table 1.

### Example 8

It is the same as Example 1 except that boehmite is replaced with aluminum oxide, carbon black is replaced with carbon nanotubes, PAA-Na is replaced with polyvinyl alcohol, and CMC-Na is replaced with CMC-Li.

### Example 9

It is the same as Example 1 except that boehmite is replaced with kaolin, carbon black is replaced with carbon nanotubes, PAA-Na is replaced with polyethylene oxide, and CMC-Na is replaced with CMC-Li.

### Examples 10 to 23

They are the same as Example 1 except that the relevant parameters are adjusted according to Table 1.

### Examples 24 to 26

They are the same as Example 23 except that the relevant parameters are adjusted according to Table 1.

### Examples 27 to 32

They are the same as Example 1 except that the relevant parameters are adjusted according to Table 1. In Examples 29 to 32, A₁/A₂ is further controlled by adjusting the solid content and slurry flow rate of the first coating slurry during the spray coating process of the first coating.

### Comparative Example 1

It is the same as Example 1 except that the relevant preparation parameters are adjusted according to Table 1.

### Comparative Example 2

It is the same as Comparative Example 1 except that the relevant preparation parameters are adjusted according to Table 1.

### Comparative Example 3

It is the same as Example 6 except that the relevant preparation parameters are adjusted according to Table 1.

### Comparative Example 4

It is the same as Example 1 except that the relevant preparation parameters are adjusted according to Table 1.

Table 1 and Table 2 show the parameters and test results of each example and comparative example.

**Table 1**

| | w₁ (%) | w₂ (%) | w₃ (%) | w₄ (%) | Mw (g/mol) | T₁ (µm) | T₂ (µm) | D₁ (µm) | D₂ (nm) | L (µm) | B (m²/g) | D₃ (µm) | T₁/D₃ | A₁/A₂ | A₁/A₃ | ρ (mg/cm²) |
|---|---|---|---|---|---|---|---|---|---|---|---|---|---|---|---|---|
| Example 1 | 40 | 16 | 42 | 2 | 4×10⁵ | 1 | 60 | 2 | / | / | 70 | 1 | 1 | 1 | 0.88 | 0.03 |
| Example 2 | 35 | 20 | 43 | 2 | 4×10⁵ | 1 | 60 | 2 | / | / | 70 | 1 | 1 | 1 | 0.88 | 0.03 |
| Example 3 | 50 | 20 | 30 | 0 | 4×10⁵ | 1 | 60 | 2 | / | / | 70 | 1 | 1 | 1 | 0.88 | 0.03 |
| Example 4 | 40 | 20 | 35 | 5 | 4×10⁵ | 1 | 60 | 2 | / | / | 70 | 1 | 1 | 1 | 0.88 | 0.03 |
| Example 5 | 28 | 20 | 50 | 2 | 4×10⁵ | 1 | 60 | 2 | / | / | 70 | 1 | 1 | 1 | 0.88 | 0.03 |
| Example 6 | 15 | 40 | 43 | 2 | 4×10⁵ | 1 | 60 | 2 | / | / | 70 | 1 | 1 | 1 | 0.88 | 0.03 |
| Example 7 | 31 | 25 | 42 | 2 | 4×10⁵ | 1 | 60 | 2 | / | / | 70 | 1 | 1 | 1 | 0.88 | 0.03 |
| Example 8 | 40 | 16 | 42 | 2 | 4×10⁵ | 1 | 60 | 2 | / | / | 70 | 1 | 1 | 1 | 0.88 | 0.03 |
| Example 9 | 40 | 16 | 42 | 2 | 4×10⁵ | 1 | 60 | 2 | / | / | 70 | 1 | 1 | 1 | 0.88 | 0.03 |
| Example 10 | 40 | 16 | 42 | 2 | 4×10⁵ | 0.5 | 60 | 2 | / | / | 70 | 1 | 0.5 | 1 | 0.88 | 0.03 |
| Example 11 | 40 | 16 | 42 | 2 | 4×10⁵ | 1.5 | 60 | 2 | / | / | 70 | 1 | 1.5 | 1 | 0.88 | 0.03 |
| Example 12 | 40 | 16 | 42 | 2 | 4×10⁵ | 1 | 60 | 2 | / | / | 70 | 0.5 | 2 | 1 | 0.88 | 0.03 |
| Example 13 | 40 | 16 | 42 | 2 | 4×10⁵ | 1 | 60 | 2 | / | / | 70 | 2 | 0.5 | 1 | 0.88 | 0.03 |
| Example 14 | 40 | 16 | 42 | 2 | 4×10⁵ | 0.8 | 60 | 2 | / | / | 70 | 1 | 0.8 | 1 | 0.88 | 0.03 |
| Example 15 | 40 | 16 | 42 | 2 | 4×10⁵ | 0.5 | 60 | 2 | / | / | 70 | 0.5 | 1 | 1 | 0.88 | 0.03 |
| Example 16 | 40 | 16 | 42 | 2 | 4×10⁵ | 1 | 40 | 2 | / | / | 70 | 1 | 1 | 1 | 0.88 | 0.03 |
| Example 17 | 40 | 16 | 42 | 2 | 4×10⁵ | 1 | 180 | 2 | / | / | 70 | 1 | 1 | 1 | 0.88 | 0.03 |
| Example 18 | 40 | 16 | 42 | 2 | 1×10⁴ | 1 | 60 | 2 | / | / | 70 | 1 | 1 | 1 | 0.88 | 0.03 |
| Example 19 | 40 | 16 | 42 | 2 | 5×10⁵ | 1 | 60 | 2 | / | / | 70 | 1 | 1 | 1 | 0.88 | 0.03 |
| Example 20 | 40 | 16 | 42 | 2 | 5×10⁵ | 1 | 60 | 0.5 | | | 90 | 1 | 1 | 1 | 0.88 | 0.03 |
| Example 21 | 40 | 16 | 42 | 2 | 5×10⁵ | 1 | 60 | 4 | | | 65 | 1 | 1 | 1 | 0.88 | 0.03 |
| Example 22 | 40 | 16 | 42 | 2 | 5×10⁵ | 1 | 60 | 5 | | | 60 | 1 | 1 | 1 | 0.88 | 0.03 |
| Example 23 | 40 | 16 | 42 | 2 | 5×10⁵ | 1 | 60 | / | 3 | 1.5 | / | 1 | 1 | 1 | 0.88 | 0.03 |
| Example 24 | 40 | 16 | 42 | 2 | 5×10⁵ | 1 | 60 | / | 2 | 1.0 | / | 1 | 1 | 1 | 0.88 | 0.03 |
| Example 25 | 40 | 16 | 42 | 2 | 5×10⁵ | 1 | 60 | / | 5 | 2.0 | / | 1 | 1 | 1 | 0.88 | 0.03 |
| Example 26 | 40 | 16 | 42 | 2 | 5×10⁵ | 1 | 60 | / | 7 | 3.0 | / | 1 | 1 | 1 | 0.88 | 0.03 |
| Example 27 | 40 | 16 | 42 | 2 | 5×10⁵ | 1 | 60 | 2 | / | / | 70 | 1 | 1 | 0.9 | 0.88 | 0.03 |
| Example 28 | 40 | 16 | 42 | 2 | 5×10⁵ | 1 | 60 | 2 | / | / | 70 | 1 | 1 | 0.8 | 0.88 | 0.03 |
| Example 29 | 40 | 16 | 42 | 2 | 5×10⁵ | 1 | 60 | 2 | / | / | 70 | 1 | 1 | 1 | 0.6 | 0.018 |
| Example 30 | 40 | 16 | 42 | 2 | 5×10⁵ | 1 | 60 | 2 | / | / | 70 | 1 | 1 | 1 | 0.74 | 0.022 |
| Example 31 | 40 | 16 | 42 | 2 | 5×10⁵ | 1 | 60 | 2 | / | / | 70 | 1 | 1 | 1 | 0.84 | 0.026 |
| Example 32 | 40 | 16 | 42 | 2 | 5×10⁵ | 1 | 60 | 2 | / | / | 70 | 1 | 1 | 1 | 1 | 0.035 |
| Comparative Example 1 | 55 | 5 | 38 | 2 | 4×10⁵ | 1 | 60 | 2 | / | / | 70 | 1 | 1 | 1 | 0.88 | 0.03 |
| Comparative Example 2 | 50 | 10 | 38 | 2 | 4×10⁵ | 1 | 60 | 2 | / | / | 70 | 1 | 1 | 1 | 0.88 | 0.03 |
| Comparative Example 3 | 10 | 40 | 48 | 2 | 4×10⁵ | 1 | 60 | 2 | / | / | 70 | 1 | 1 | 1 | 0.88 | 0.03 |
| Comparative Example 4 | 40 | 25 | 25 | 10 | 4×10⁵ | 1 | 60 | 2 | / | / | 70 | 1 | 1 | 1 | 0.88 | 0.03 |

| | | | | | | | | | | | | | | | | |
|---|---|---|---|---|---|---|---|---|---|---|---|---|---|---|---|---|
| Note: "/" in Table 1 indicates that such relevant preparation parameter is not involved. | | | | | | | | | | | | | | | | |

**Table 2**

| | R₁ (Ω/mm²) | R₂ (Ω/mm²) | λ (W/(m·K)) | S₁ (mN·m) | S₂ (mN·m) | P (N/m) | Direct current resistance (Ohm) | Rate capacity retention rate (%) | Cycling capacity retention rate (%) | Puncture test pass rate (%) | Drop test pass rate (%) | Impact test pass rate (%) |
|---|---|---|---|---|---|---|---|---|---|---|---|---|
| Example 1 | 0.17 | 1.21 | 0.72 | 0.065 | 0.20 | 15.61 | 2.9 | 97 | 94 | 100 | 100 | 100 |
| Example 2 | 0.011 | 0.44 | 0.74 | 0.062 | 0.19 | 16.15 | 2.6 | 99.5 | 96 | 90 | 100 | 100 |
| Example 3 | 0.05 | 0.56 | 0.56 | 0.23 | 0.69 | 12.45 | 2.5 | 98.8 | 95.1 | 90 | 90 | 90 |
| Example 4 | 0.03 | 0.051 | 0.68 | 0.16 | 0.16 | 12.78 | 2.55 | 99.2 | 95.5 | 95 | 95 | 95 |
| Example 5 | 0.013 | 0.58 | 0.85 | 0.052 | 0.16 | 18.76 | 3.3 | 99.1 | 95.3 | 80 | 85 | 85 |
| Example 6 | 0.01 | 0.36 | 0.77 | 0.057 | 0.18 | 14.28 | 2.55 | 99.3 | 96 | 75 | 80 | 80 |
| Example 7 | 0.02 | 0.48 | 0.78 | 0.049 | 0.17 | 14.28 | 2.8 | 98.3 | 94.5 | 85 | 90 | 90 |
| Example 8 | 0.15 | 1.13 | 0.71 | 0.068 | 0.20 | 15.45 | 3 | 96.5 | 93.5 | 95 | 100 | 100 |
| Example 9 | 0.18 | 1.43 | 0.75 | 0.068 | 0.23 | 15.87 | 3.1 | 96.1 | 93.2 | 95 | 100 | 100 |
| Example 10 | 0.08 | 0.86 | 0.81 | 0.054 | 0.18 | 15.87 | 3.2 | 96.1 | 92.8 | 90 | 100 | 100 |
| Example 11 | 0.21 | 1.65 | 0.61 | 0.083 | 0.22 | 15.28 | 3 | 96.8 | 93.8 | 95 | 100 | 100 |
| Example 12 | 0.19 | 1.43 | 0.71 | 0.063 | 0.19 | 13.37 | 3.1 | 96.3 | 93.2 | 90 | 100 | 100 |
| Example 13 | 0.16 | 1.2 | 0.72 | 0.065 | 0.20 | 15.76 | 3.1 | 96.5 | 93.3 | 90 | 100 | 100 |
| Example 14 | 0.16 | 1.19 | 0.71 | 0.059 | 0.18 | 16.12 | 2.9 | 96.9 | 93.8 | 95 | 100 | 100 |
| Example 15 | 0.09 | 0.75 | 0.75 | 0.042 | 0.15 | 18.27 | 2.9 | 96.7 | 93.6 | 90 | 100 | 100 |
| Example 16 | 0.17 | 1.08 | 0.72 | 0.065 | 0.19 | 16.28 | 2.8 | 97.2 | 94.3 | 95 | 100 | 100 |
| Example 17 | 0.17 | 1.59 | 0.72 | 0.065 | 0.28 | 14.78 | 3.1 | 95.8 | 92.6 | 100 | 100 | 100 |
| Example 18 | 0.17 | 1.22 | 0.71 | 0.061 | 0.19 | 12.32 | 2.9 | 96.8 | 93.8 | 95 | 100 | 100 |
| Example 19 | 0.17 | 1.23 | 0.73 | 0.079 | 0.21 | 18.25 | 2.9 | 96.6 | 93.7 | 100 | 100 | 100 |
| Example 20 | 0.15 | 1.12 | 0.78 | 0.062 | 0.192 | 14.67 | 2.85 | 97.3 | 94.3 | 95 | 100 | 100 |
| Example 21 | 0.19 | 1.42 | 0.73 | 0.076 | 0.198 | 15.86 | 3.2 | 94.6 | 92.2 | 100 | 100 | 100 |
| Example 22 | 0.32 | 1.85 | 0.65 | 0.087 | 0.217 | 15.82 | 3.6 | 93.3 | 91.7 | 100 | 100 | 100 |
| Example 23 | 0.15 | 1.15 | 0.78 | 0.075 | 0.22 | 16.89 | 2.8 | 97.2 | 93.8 | 100 | 100 | 100 |
| Example 24 | 0.16 | 1.18 | 0.76 | 0.072 | 0.21 | 16.78 | 2.86 | 96.7 | 93.3 | 90 | 100 | 100 |
| Example 25 | 0.19 | 1.23 | 0.73 | 0.066 | 0.196 | 15.56 | 2.96 | 95.2 | 92.4 | 90 | 100 | 100 |
| Example 26 | 0.24 | 1.46 | 0.71 | 0.066 | 0.196 | 15.77 | 3.16 | 94.6 | 91.8 | 90 | 100 | 100 |
| Example 27 | 0.17 | 1.21 | 0.72 | 0.065 | 0.21 | 15.61 | 2.9 | 96.5 | 93.6 | 85 | 100 | 100 |
| Example 28 | 0.21 | 1.32 | 0.69 | 0.065 | 0.23 | 15.27 | 2.95 | 96.3 | 93.5 | 80 | 100 | 100 |
| Example 29 | 0.36 | 2.58 | 0.71 | 0.063 | 0.196 | 13.61 | 3.3 | 94.6 | 91.8 | 85 | 95 | 95 |
| Example 30 | 0.27 | 2.12 | 0.73 | 0.064 | 0.196 | 14.32 | 3.1 | 95.8 | 92.8 | 90 | 95 | 95 |
| Example 31 | 0.22 | 1.86 | 0.71 | 0.065 | 0.198 | 15.16 | 3.0 | 96.6 | 93.5 | 95 | 100 | 100 |
| Example 32 | 0.17 | 1.28 | 0.71 | 0.064 | 0.2 | 11.36 | 2.91 | 96.1 | 93.2 | 100 | 100 | 100 |
| Comparative Example 1 | 0.37 | 3.73 | 0.67 | 0.11 | 0.33 | 15.38 | 4.43 | 93 | 82 | 100 | 100 | 100 |
| Comparative Example 2 | 0.34 | 3.38 | 0.68 | 0.07 | 0.21 | 15.32 | 3.42 | 94 | 85 | 95 | 100 | 100 |
| Comparative Example 3 | 0.02 | 0.31 | 0.76 | 0.053 | 0.16 | 15.28 | 2.6 | 98.5 | 95 | 0 | 10 | 10 |
| Comparative Example 4 | 0.04 | 0.06 | 0.65 | 0.18 | 0.18 | 9.65 | 3.1 | 98.3 | 94.9 | 55 | 65 | 65 |

From Examples 1 to 32 and Comparative Examples 1 to 4, it can be seen that when the first coating is disposed between the positive electrode current collector and the second coating of the positive electrode plate, and the mass percentages of the inorganic material, the conductive agent, the binder, and the dispersant in the first coating are controlled within the scope of this application, the safety performance (including puncture performance, drop performance, and impact performance) and electrical performance (including direct current resistance, rate performance, and cycling performance) of the lithium-ion battery are improved, especially the puncture performance. In addition, the bonding force between the second coating and the positive electrode current collector is increased. In Comparative Example 1, the mass percentages of the inorganic material and the conductive agent in the first coating are both outside the scope of this application. In Comparative Example 2, the mass percentage of the conductive agent in the first coating is outside the scope of this application. In Comparative Example 3, the mass percentage of the inorganic material in the first coating is outside the scope of this application. In Comparative Example 4, the mass percentages of the binder and the dispersant in the first coating are both outside the scope of this application. This indicates that when the mass percentages of the inorganic material, the conductive agent, the binder, and the dispersant in the first coating are controlled within the scope of this application, the electrical performance and safety performance of the lithium-ion battery can be effectively improved. The lithium-ion batteries in Examples 1 to 32 have low direct current resistance, high rate capacity retention rate, high cycling capacity retention rate, high puncture test pass rate, high drop test pass rate, and high impact test pass rate, especially the puncture test pass rate, indicating that the electrical performance and safety performance of the lithium-ion battery are improved. In Comparative Example 2, the mass percentage of the inorganic material in the first coating is high and the mass percentage of the conductive agent is excessively low, which compromises electrical conductivity of the positive electrode plate, and thus reducing the cycling capacity retention rate of the lithium-ion battery.

The value of T₁/D₃ usually affects the safety performance and electrical performance of the lithium-ion battery. From Examples 10 to 15, it can be seen that when the value of T₁/D₃ is within the scope of this application, the direct current resistance of the lithium-ion battery is low, the rate capacity retention rate, cycling capacity retention rate, puncture test pass rate, drop test pass rate, and impact test pass rate are all high, especially the puncture test pass rate, indicating that the lithium-ion battery of this application has high electrical performance and safety performance. In Examples 10 and 15, the first coating is thin, which reduces the barrier effect of the first coating, resulting in a low puncture test pass rate for the lithium-ion battery.

The value of T₂ usually affects the safety performance and electrical performance of the lithium-ion battery. From Examples 1, 16, and 17, it can be seen that when the value of T₂ is within the scope of this application, the direct current resistance of the lithium-ion battery is low, and the rate capacity retention rate, cycling capacity retention rate, puncture test pass rate, drop test pass rate, and impact test pass rate are all high, especially the puncture test pass rate, indicating that the lithium-ion battery of this application has high electrical performance and safety performance.

The value of Mw usually affects the safety performance and electrical performance of the lithium-ion battery. From Examples 1, 18, and 19, it can be seen that when the value of Mw is within the scope of this application, the direct current resistance of the lithium-ion battery is low, and the rate capacity retention rate, cycling capacity retention rate, puncture test pass rate, drop test pass rate, and impact test pass rate are all high, especially the puncture test pass rate, indicating that the lithium-ion battery of this application has high electrical performance and safety performance. The value of Mw in Example 19 is great, so that the value of P increases, which reduces the stability of the first coating slurry, worsens the dispersion uniformity of the conductive agent in the slurry, and thus slightly reduces the rate capacity retention rate and cycling capacity retention rate.

The size and structure of the conductive agent, such as the values of D₁, D₂, L, and B, usually affect the safety performance and electrical performance of the lithium-ion battery. From Examples 1 and 20 to 22, it can be seen that when the conductive agent is carbon black and the average particle size D₁ of the carbon black is within the scope of this application, the direct current resistance of the lithium-ion battery is low, and the rate capacity retention rate, cycling capacity retention rate, puncture test pass rate, drop test pass rate, and impact test pass rate are all high, especially the puncture test pass rate. From Examples 23 to 26, it can be seen that when the conductive agent is carbon nanotubes and the average tube diameter D₂ and average tube length L of the carbon nanotubes are within the scope of this application, the direct current resistance of the lithium-ion battery is low, and the rate capacity retention rate, cycling capacity retention rate, puncture test pass rate, drop test pass rate, and impact test pass rate are all high, especially the puncture test pass rate, indicating that the lithium-ion battery of this application has high electrical performance and safety performance.

The values of A₁/A₂ and A₁/A₃ usually affect the safety performance and electrical performance of the lithium-ion battery. From Examples 1 and 27 to 32, it can be seen that when the values of A₁/A₂ and A₁/A₃ are within the scope of this application, the direct current resistance of the lithium-ion battery is low, and the rate capacity retention rate, cycling capacity retention rate, puncture test pass rate, drop test pass rate, and impact test pass rate are all high, especially the puncture test pass rate, indicating that the lithium-ion battery of this application has high electrical performance and safety performance. The value of A₁/A₃ in the positive electrode plate of Example 32 is great, which has a slight impact on the electrical performance and safety performance of the lithium-ion battery is small but increases production cost.

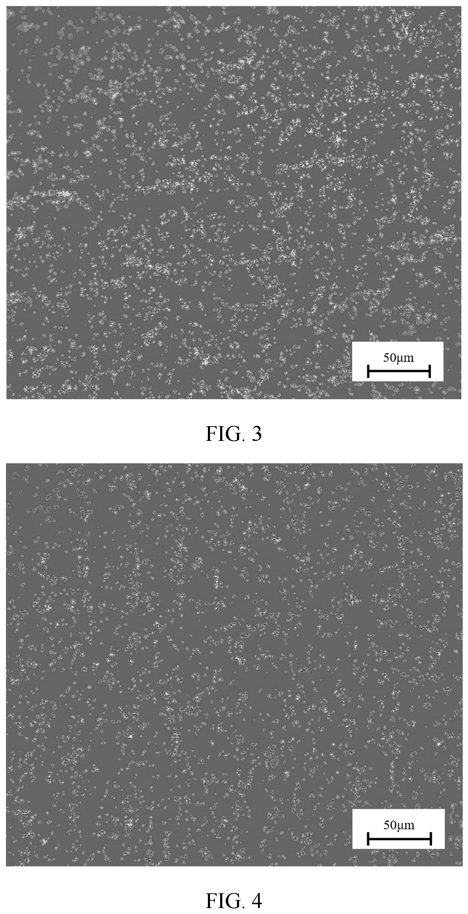

As shown in FIG. 2 to FIG. 4, the white areas in the figures are the exposed surfaces of the positive electrode current collector, and the black areas are the surfaces of the first coating. In FIG. 2, A₁/A₃ is 0.74, and the peel strength of the second coating is 14.32 N/m. In FIG. 3, A₁/A₃ is 0.84, and the peel strength of the second coating is 15.16 N/m. In FIG. 4, A₁/A₃ is 0.88, and the peel strength of the second coating is 15.61 N/m. Combined with Table 2, in Example 32, A₁/A₃ is 1, and the peel strength of the second coating is 11.36 N/m. It can be seen that controlling A₁/A₃ within the scope of this application helps increase the peel strength of the second coating.

It should be noted that in this document, relational terms such as "first" and "second" are used only to distinguish one entity or operation from another entity or operation, and do not necessarily require or imply any such actual relationship or order between these entities or operations. Moreover, the terms "comprise", "include" or any other variations thereof are intended to cover a non-exclusive inclusion, so that a process, method or article that comprises a list of elements includes not only those elements but also other elements not explicitly listed, or further includes elements inherent to such process, method, or article.

The various embodiments described in this specification are presented in a related manner. For aspects that are identical or similar among the embodiments may be made to the corresponding descriptions of other embodiments. Each embodiment primarily emphasizes its differences from other embodiments.

The foregoing descriptions are merely preferred embodiments of this application and are not intended to limit this application. Any modifications, equivalent replacements, improvements, and the like made within the spirit and principles of this application shall fall within the scope of protection of this application.

## Claims

1. A secondary battery, comprising a positive electrode plate, wherein the positive electrode plate comprises a positive electrode current collector (10) and a coating disposed on at least one surface of the positive electrode current collector (10), the coating comprises a first coating (11) and a second coating (12), and along a thickness direction of the positive electrode plate, the first coating (11) is disposed between the positive electrode current collector (10) and the second coating (12); wherein
the first coating (11) comprises an inorganic material, a conductive agent, a binder, and a dispersant; based on total mass of the first coating (11), a mass percentage of the inorganic material is w₁, wherein 15%≤w₁≤50%, a mass percentage of the conductive agent is w₂, wherein 15%<w₂≤40%, a mass percentage of the binder is w₃, wherein 30%≤w₃≤50%, and a mass percentage of the dispersant is w₄, wherein 0≤w₄≤5%.

2. The secondary battery according to claim 1, wherein a sum of resistances of the positive electrode current collector (10) and the first coating (11) is R₁ Ω/mm², wherein 0.001≤R₁≤0.5; and/or, a resistance of the positive electrode plate is R₂ Ω/mm², wherein 0.1≤R₂≤4.

3. The secondary battery according to claim 2, wherein 0.1≤R₁≤0.3 and/or 1≤R₂≤3.

4. The secondary battery according to any one of claims 1 to 3, wherein the positive electrode plate satisfies at least one of the following characteristics:
(1) 35%≤w₁≤50%;
(2) 15%<w₂≤25%;
(3) a sum of thermal conductivities of the positive electrode current collector (10) and the first coating (11) is λ W/(m·K), wherein 0.55≤λ≤0.8;
(4) a sum of stiffnesses of the positive electrode current collector (10) and the first coating (11) is S₁ mN·m, wherein 0.03≤S₁≤0.25;
(5) a stiffness of the positive electrode plate is S₂ mN·m, wherein 0.01≤S₂≤0.7; and
(6) a peel strength of the second coating (12) is P N/m, wherein 10≤P≤20.

5. The secondary battery according to any one of claims 1 to 4, wherein the positive electrode plate satisfies at least one of the following characteristics:
(1) the inorganic material comprises at least one of boehmite, aluminum oxide, aluminosilicate, silicon dioxide, hydrotalcite, kaolin, or titanate nanoparticles;
(2) the conductive agent comprises at least one of carbon black or carbon nanotubes;
(3) the binder comprises at least one of polyacrylic acid, sodium polyacrylate, lithium polyacrylate, polyvinyl alcohol, polyethylene oxide, styrene-butadiene resin, sodium alginate, or chitosan; and
(4) the dispersant comprises at least one of sodium carboxymethyl cellulose or lithium carboxymethyl cellulose.

6. The secondary battery according to claim 5, wherein a weight-average molecular weight of the binder is Mw g/mol, wherein 1×10⁴≤Mw≤5×10⁵.

7. The secondary battery according to claim 5, wherein the conductive agent satisfies at least one of the following characteristics:
(1) an average particle size of the carbon black is D₁ µm, wherein 0.5≤D₁≤4;
(2) an average tube diameter of the carbon nanotube is D₂ nm, wherein 2≤D₂≤5, and an average tube length of the carbon nanotube is L µm, wherein 1≤L≤2; and
(3) a specific surface area of the conductive agent is B m²/g, wherein 60≤B≤90.

8. The secondary battery according to any one of claims 1 to 7, wherein the positive electrode plate satisfies at least one of the following characteristics:
(1) a single-sided thickness of the first coating (11) is T₁ µm, wherein 0.5≤T₁≤1.5;
(2) a single-sided thickness of the second coating (12) is T₂ µm, wherein 40≤T₂≤180; and
(3) an average particle size of the inorganic material is D₃ µm, wherein 0.5≤D₃≤2.

9. The secondary battery according to any one of claims 1 to 8, wherein a single-sided thickness of the first coating (11) is T₁ µm, an average particle size of the inorganic material is D₃ µm, and 0.8≤T₁/D₃≤1.5.

10. The secondary battery according to any one of claims 1 to 9, wherein along the thickness direction of the positive electrode plate, an orthographic projection area of the first coating (11) on a surface of the positive electrode current collector (10) is A₁, an orthographic projection area of the second coating (12) on the surface of the positive electrode current collector (10) is A₂, and A₁/A₂ is 0.9 to 1.

11. The secondary battery according to claim 10, wherein along the thickness direction of the positive electrode plate, an area of the positive electrode current collector (10) is A₃, and A₁/A₃ is 0.6 to 0.9.

12. The secondary battery according to any one of claims 1 to 11, wherein a surface density of the first coating (11) is ρ mg/cm², wherein 0.01≤ρ≤0.05.

13. An electronic apparatus, comprising the secondary battery according to any one of claims 1 to 12.
